# EUROPÄISCHE PATENTSCHRIFT

(11) **EP 1 789 502 B1**
(45) Veröffentlichungstag und Bekanntmachung des Hinweises auf die Patenterteilung: **16.03.2011**
(21) Anmeldenummer: 06761987.4
(22) Anmeldetag: 08.06.2006
(51) Int. Cl.: C09D 5/10, C09D 163/00, C09D 183/08

(54) **ZWEIKOMPONENTEN-KORROSIONSSCHUTZLACK, DESSEN VERWENDUNG UND VERFAHREN ZU DESSEN HERSTELLUNG**
TWO-COMPONENT ANTICORROSIVE PAINT, USE THEREOF AND METHOD FOR PRODUCING THE SAME
PEINTURE ANTICORROSION A DEUX COMPOSANTS, SON UTILISATION ET PROCEDE PERMETTANT DE LA PRODUIRE

(30) Priorität: 08.06.2005 DE 102005026523
(43) Veröffentlichungstag der Anmeldung: 30.05.2007
(73) Patentinhaber: Eckart GmbH, 91235 Hartenstein (DE); NTC Nano Tech Coatings GmbH, 66636 Tholey (DE)
(72) Erfinder: SCHRAMM, Christian, 91217 Hersbruck (DE); VOIT, Thomas, 91275 Auerbach (DE); WAGNER, Georg, 66636 Tholey (DE); FÖRSTER, Wolfgang, 45239 Essen (DE)
(74) Vertreter: Walcher, Armin
(86) Internationale Anmeldenummer: PCT/EP2006/005479
(87) Internationale Veröffentlichungsnummer: WO 2006/131359

(56) Entgegenhaltungen:
- EP-A- 1 191 074
- EP-A- 1 500 686
- DE-A1- 4 030 523
- PATENT ABSTRACTS OF JAPAN Bd. 017, Nr. 478 (C-1104), 31. August 1993 (1993-08-31) & JP 05 117553 A (NIPPON OIL & FATS CO LTD), 14. Mai 1993 (1993-05-14)

## Beschreibung

Die Erfindung betrifft einen Zweikomponenten-Korrosionsschutzlack mit Metallpigment, Epoxybindemittelkomponente und aminischem Härter, dessen Verwendung sowie ein Verfahren zu dessen Herstellung.

Korrosionsschutzbeschichtungen des schweren Korrosionsschutzes bestehen aus drei, meist vier Beschichtungen. In der Basisschicht ist meist Zinkstaub enthalten. Die Zinkpigmente dienen aufgrund des stark elektronegativen Charakters von Zink als Opferanoden. Es schließen sich ein oder zwei Lackschichten an, die vorwiegend plättchenförmige Pigmente wie beispielsweise Eisenglimmer enthalten. Diese plättchenförmigen Pigmente verlängern die Diffusionswege von Wasser und/oder Sauerstoff. Abschließend wird ein Decklack aufgebracht, der meist aus einem Zweikomponenten-Polyurethansystem besteht.

Verwendet werden diese Korrosionsschutzbeschichtungen vorwiegend auf Stahlteilen wie beispielsweise Eisenbahnbrücken, Gittermasten oder Leitplanken an Autobahnen. Im Zuge der erstrebten Verminderung von VOC-Emissionen besteht ein starkes Interesse an der Reduzierung des Lösemittelgehaltes derartiger Korrosionsschutzanstriche. Weiterhin besteht ein starkes Interesses an der Reduzierung der aufwendigen, personal- und kostenintensiven Aufbringung des vierschichtigen Lackaufbaus.

Die EP 0 808 883 A2 offenbart eine chromfreie Beschichtungszusammensetzung bestehend aus einer hochsiedenden organischen Flüssigkeit, Metallpigmenten wie beispielsweise Zinkflakes, einem Verdicker und 3 bis 20 Gew.-% eines organofunktionellen Silans. Das organofunktionelle Silan kann ein epoxyfunktionelles Silan sein.

Die Zusammensetzung weist nachteiligerweise einen sehr hohen Wassergehalt von 30 bis 60 Gew.-% auf. Obwohl in der EP 0 808 883 A2 auf die passivierende Wirkung des Silanes und weiterer optional zugegebener Komponenten wie beispielsweise Phosphate oder Borate hingewiesen wird, sind in der Praxis diese Zusammensetzungen aufgrund des hohen Wassergehaltes nicht zuverlässig gasungsstabil. Um die Korrosionsbeständigkeit der Beschichtungszusammensetzung zu erhöhen, wird dieser eine hochsiedende organische Flüssigkeit in erheblichen Anteilen von vorzugsweise 15 bis 25 Gew.-% zugesetzt. Die Verwendung einer hochsiedenden organischen Flüssigkeit in erheblichen Mengen ist aus trocknungsstechnischer und ökologischer Sicht unerwünscht.

Die EP 1 199 339 A1 offenbart eine weitere chromfreie

Beschichtungszusammensetzung, die 20 - 70 Gew.-% Wasser, eine niedrig siedende organische Flüssigkeit, Metallpigmente wie beispielsweise Zinkflakes, einen Verdicker, 3 bis 20 Gew.-% eines organofunktionellen Silans und ein Netzmittel umfaßt. Um die Korrosionsbeständigkeit der Beschichtungszusammensetzung im Hinblick auf den sehr hohen Anteil von Wasser zu erhöhen, werden vorzugsweise 15 bis 25 Gew.-% der niedrig siedenden organischen Flüssigkeit verwendet. Im Hinblick auf die nicht unbeträchtlichen Emissionen an organischer Flüssigkeit wäre es wünschenswert, eine Korrosionsschutzzusammensetzung zu haben, die nicht die Verwendung erheblicher Mengen an organischen Flüssigkeiten erfordert, um eine Korrosion der Zinkflakes zu vermeiden.

Die DE 43 23 062 A1 offenbart einen wasserverdünnbaren

Zinkstaubbeschichtungsstoff. Dieser setzt sich aus zwei Komponenten folgendermaßen zusammen:

### Komponente A:

0,5 bis 10 Gew-% Aminhärter
1-30 Gew-% wasserverdünnbare Lösemittel
45 - 95 Gew.-% Zn-Pulver oder Zn-Staub
   und

### Komponente B:

1 bis 25 Gew-% Epoxidhärter.

Diese Zusammensetzung entspricht den konventionellen Zn-Staub-Korrosionsbeschichtungen. Es werden konventionelle Epoxid- und Aminhärter verwendet. Derartige Korrosionsschutzbeschichtungen werden als Grundierung eingesetzt und erfordern, wie auch die Korrosionschutzbeschichtungen gemäß den 3 Lehren der EP 0 808 883 A2 und EP 1 199 339 A1, den üblichen vierstufigen Lackschichtenaufbau.

Im Hinblick auf die zeit- und kostenintensiven Lackierungsarbeiten an beispielsweise Eisen- und Stahlkonstruktionen wie Brücken, Gebäuden, etc. wäre es wünschenswert, eine Korrosionsschutzzusammensetzung zu haben, die nicht die Aufbringung von zwei oder drei weiteren Schichten auf der Grundierungsschicht erfordert.

Die EP 1 191 074 A1 offenbart Zweikomponenten-shop-primer Zusammensetzungen. Die erste Komponente des Shop-primers besteht aus einem omega-Aminosilan, einer relativ starken Säure, einem Epoxysilan sowie ein oder mehreren Pigmenten, wobei mindestens 25 Gew.- % der Pigmente leitfähige Eigenschaften haben müssen.

Die zweite Komponente besteht aus fein zerteiltem Zink, wobei hier sowohl Zn-Staub als auch Zn-Flakes in Frage kommen.

Diese Zusammensetzungen sind weitgehend lösemittel- und wasserfrei. Jedoch ist eine andere Anwendung außer jener als shop-primer, d.h. als ein erster Korrosionsschutz nicht praktikabel. Die unter Verwendung des shop-primers aufgebrachte Korrosionsschutzschicht muß jedenfalls mit weiteren Beschichtungen versehen werden, um einen längerfristigen Korrosionsschutz zu erhalten.

Die DE 101 52 853 A1 offenbart eine härtbare Mischung auf der Grundlage von Hydrolyseprodukten von Organosilanen, die als zwingende Komponente Epoxysilane sowie mindestens ein blockiertes Polyisocyanat enthalten. Die Verwendung einer derartigen härtbaren Mischung zusammen mit Zn-Pigmenten in Korrosionsschutzanwendungen ist nicht beschrieben.

Die DE 100 39 404 A1 offenbart ein Verfahren zur Herstellung einer härtbaren Mischung auf der Grundlage von Hydrolyseprodukten von Organosilanen, die als zwingende Komponente Epoxysilane sowie Pigmente oder Füllstoffe enthalten. Die Epoxysilane können dabei mit aromatischen Polyolen umgesetzt werden. Als Pigmente sind Aluminiumpigmente und Zn-Staub beschrieben.

Aufgabe der vorliegenden Erfindung ist es, einen lösemittelarmen Korrosionsschutzlack zu finden, mit dem ein aus nur ein bis zwei Lackschichten bestehendes Korrosionsschutzlacksystem verwirklicht werden kann. Die Gesamtschichtdicke dieses ein- bis zweischichtigen Korrosionsschutzlacksystems soll deutlich unterhalb der bisher üblichen Schichtdicken liegen. Das System soll die Prüfvorschriften der ISO 12944 C5 - I erfüllen.

Weiterhin ist es Ausgabe der vorliegenden Erfindung, ein Verfahren zur Herstellung eines derartigen Korrosionsschutzlacksystems zu finden.

Die Aufgabe wird durch Bereitstellung eines Zweikomponenten-Korrosionsschutzlack mit Metallpigment, Epoxybindemittelkomponente und aminischem Härter gelöst, bei dem der Zweikomponenten-Korrosionsschutzlack zwei Komponenten A und B enthält, wobei

### Komponente A

(a1) (x - y) Gew.-% plättchenartige Zink-haltige Metallpigmente umfassende Metallpigmente, wobei x = 30 bis 70 ist,
(a2) 10 bis 50 Gew.-% mindestens eines Epoxysilans und/oder Epoxysilikons,
(a3) 0 bis 40 Gew.-% eines organischen Lösemittels umfaßt
   und wobei

### Komponente B

(b1) 2 bis 15 Gew.-% mindestens eines aminischen Härters,
(b2) y Gew.-% plättchenartige Zink-haltige Metallpigmente umfassende Metallpigmente, wobei y = 0 bis x Gew.-% ist,
(b3) 0 bis 40 Gew.-% eines organischen Lösemittels, umfasst,
   wobei sich die Gewichtsangaben auf das Gewicht des gesamten Zweikomponenten-Korrosionsschutzlackes beziehen und in der Summe 100 Gew.-% ergeben, mit der Maßgabe, dass der Wassergehalt des Zweikomponenten-Korrosionsschutzlacks insgesamt nicht mehr als 5 Gew.-%, der Gehalt an Lösemittel insgesamt nicht mehr als 40 Gew.-% und der Gehalt der plättchenartigen Zink-haltigen Metallpigmente insgesamt wenigstens 20 Gew.-% beträgt.

Die Aufgabe wird weiterhin gelöst durch ein Verfahren zur Herstellung eines Zweikomponenten-Korrosionsschutzlackes nach einem der Ansprüche 1 bis 18, das folgende Schritte umfaßt:
a) Vorlegen von 10 bis 50 Gew.-% von Epoxysilan wobei das Epoxysilan durch kontrollierte Zugabe von Wasser optional oligomerisiert oder polymerisiert werden kann,
b) Vörlegen von 2 bis 15 Gew.-% an aminischem Härter,
c) Homogenes Vermischen von (x - y) Gew.-% der plättchenartigen Zink-haltigen Metallpigmente umfassenden Metallpigmente wobei x = 30 bis 70 ist, mit dem Epoxysilan unter Bereitstellung der Komponente A und y Gew.-% plättchenartige Zink-haltige Metallpigmente umfassende Metallpigmente mit dem aminischen Härter, wobei y = 0 bis x Gew.-% ist, unter Bereitstellung der Komponente B.

Die Aufgabe wird des weiteren durch ein Verfahren zur Herstellung eines Zweikomponenten-Korrosionsschutzlackes gelöst, bei dem die Komponente A und die Komponente B miteinander vermengt werden. Der erfindungsgemäße Zweikomponenten-Korrosionsschutzlack kann mithin vor Ort, beispielsweise auf einer Baustelle, durch Vermengen der beiden Komponenten A und B gebrauchsfertig hergestellt werden.

Die der Erfindung zugrunde liegende Aufgabe wird auch durch die Verwendung des Zweikomponenten-Korrosionsschutzlacks nach einem der Ansprüche 1 bis 18 zur Herstellung von Korrosionsschutzbeschichtungen gelöst.

Die Aufgabe der Erfindung wird ferner durch die Verwendung eines Zweikomponenten-Korrosionsschutzlacks nach einem der Ansprüche 1 bis 19 sowie einem Decklack zur Herstellung von zweischichtigen Korrosionsschutzbeschichtungengelöst.

Die der Erfindung zugrundeliegende Aufgabe wird auch durch die Bereitstellung einer Korrosionsschutzbeschichtung, die aus einer ersten Beschichtung, die aus einem Zweikomponenten-Korrosionsschutzlack nach einem der Ansprüche 1 bis 18 hergestellt ist, und aus einer Decklackschicht besteht, gelöst.

Schließlich wird die Aufgabe der Erfindung auch durch Bereitstellung eines Gegenstandes, der mit einem Zweikomponenten-Korrosionsschutzlack nach einem der Ansprüche 1 bis 18 oder einer Korrosionsschutzbeschichtung nach Anspruch 26 versehen ist, gelöst.

Bevorzugte Weiterbildungen der Erfindung sind jeweils in den Unteransprüchen angegeben.

Den Erfindern ist es überraschenderweise gelungen, den bislang üblichen vierschichtigen Lackaufbau durch einen zweischichtigen Lackaufbau zu ersetzen. Es hat sich überraschend herausgestellt, daß bei Verwendung einer Kombination einer speziellen Epoxyverbindung, nämlich eines Epoxysilans und/oder Epoxysilikons, in Verbindung mit plättchenartigen Zink-haltigen-Metallpigmente umfassenden Metallpigmenten ein stabiler und äußerst beständiger Zweikomponenten-Korrosionsschutzlack hergestellt werden kann. Der erfindungsgemäße Zweikomponenten-Korrosionsschutzlack weist eine solche Beständigkeit auf, daß zwei der drei üblichen zusätzlichen Lackschichten eingespart werden können.

Die erste Schicht besteht aus dem erfindungsgemäßen Zweikomponenten-Korrosionsschutzlack.

Als zweite Lackierung wird ein Decklack verwendet. Hierbei handelt es sich bevorzugt um ein Zweikomponenten-Polyurethansystem, jedoch kann auch das als Basislack verwendete Zweikomponenten-Epoxysilansystem, allerdings ohne Pigmentierung mit Zinkpigmenten, verwendet werden.

### Überraschenderweise eignet sich die erfindungsgemäße

Korrosionsschutzbeschichtung mit nur zwei Schichten zur Verwendung als schwerer Korrosionsschutz beispielsweise auf Stahlteilen wie Eisenbahnbrücken, Gittermasten oder Leitplanken an Autobahnen.

Der erfindungsgemäße Zweikomponenten-Korrosionsschutzlack enthält Metallpigmente, die plättchenartige Zink-haltige Metallpigmente sind oder umfassen. Neben den Zink-haltigen plättchenartigen Metallpigmenten können mithin weitere Metallpigmente vorhanden sein. Es hat sich jedoch gezeigt, daß wenigstens 30 Gew.-% plättchenartige Zink-haltige Metallpigmente in dem erfindungsgemäßen Zweikomponenten-Korrosionsschutzlack enthalten sein müssen.

Gemäß einer bevorzugten Ausführungsform der Erfindung sind in dem Zweikomponenten-Korrosionsschutzlack neben den plättchenartigen Zink-haltigen Metallpigmenten auch Zink-haltiger Metallstaub und/oder plättchenartige Aluminium-haltige Metallpigmente enthalten.

Bei diesen Metallpigmenten handelt es sich um Korrosionsschutzpigmente, wobei Zn-haltiger Metallstaub im wesentlichen elektrochemisch wirkt (Opferanode), plättchenartige Aluminium-haltige Pigmente über eine Barrierewirkung wirksam sind und plättchenartige Zn-haltige Metallpigmente beide Wirkmechanismen miteinander vereinen.

Gemäß einer bevorzugten Ausführungsform werden als plättchenartige Zink-haltige Metallpigmente plättchenartige Zinkpigmente verwendet, d.h. Pigmente die einen Gehalt von 98 bis 100 Gew.-% Zink aufweisen. Der Gehalt an plättchenartigen Zink-haltigen Metallpigmenten, vorzugsweise plättchenartigen Zinkpigmenten, in dem Zweikomponenten-Korrosionsschutzlack liegt vorzugsweise in einem Bereich von 30 bis 50 Gew.-% und besonders bevorzugt von 30 bis 45 Gew.-%, bezogen auf das Gesamtgewicht des Lackes.

Bevorzugt wird als Zink-haltiger Metallstaub Zinkstaub verwendet. Der Zinkstaub liegt vorzugsweise in feinpartikulärer Form beispielsweise als Granulat oder Grieß vor. Der Partikeldurchmesser liegt dabei üblicherweise in einem Bereich von 0,5 bis 150 µm und vorzugsweise von 2 bis 80 µm. Der Zinkstaub weist vorzugsweise einen Gehalt von 98 bis 100 Gew.-% Zink auf. Der Gehalt an Zink-haltigem Metallstaub, vorzugsweise Zinkstaub, in dem Zweikomponenten-Korrosionsschutzlack liegt vorzugsweise in einem Bereich von 0 bis 40 Gew.-%, vorzugsweise von 5 bis 30 Gew.-%, bezogen auf das Gesamtgewicht des Lackes.

Bei Verwendung eines Pigmentgemisches aus plättchenartigen Zink-haltigen Metallpigmenten und Zink-haltigem Metallstaub liegt das Gewichtsverhältnis des Zink-haltigen Metallstaubes zu den plättchenartigen Zink-haltigen Metallpigmenten vorzugsweise in einem Bereich von 0:1 bis 1:1, weiter bevorzugt von 0:1 bis 0,5:1, noch weiter bevorzugt von 0,05:1 bis 0,3:1. Als sehr geeignet hat sich ein Gewichtsverhältnis von Zink-haltigem Metallstaub zu plättchenartigen Zink-haltigen Pigmenten in einem Bereich von 0,1:1 bis 0,25:1 erwiesen.

Eine Mischung von plättchenartigen Zink-haltigen Metallpigmenten und Zink-haltigem Metallstaub kann sich vorteilhaft auswirken, da hier aufgrund der vermehrten Pigment-Pigment-Kontakte eine bessere elektrische Leitfähigkeit in der ausgehärteten Korrosionsschutzschicht gegeben ist.

Bei Verwendung eines Pigmentgemisches aus plättchenartigen Zink-haltigen Metallpigmenten und plättchenartigen Aluminium-haltigen Metallpigmenten liegt das Gewichtsverhältnis der plättchenartigen Aluminium-haltigen Metallpigmente zu den plättchenartigen Zink-haltigen Metallpigmenten vorzugsweise in einem Bereich von 0:1 bis 0,3:1, weiter bevorzugt von 0:1 bis 0,2:1, noch weiter bevorzugt von 0,05:1 bis 0,15:1.

Gemäß einer bevorzugten Weiterbildung der Erfindung umfasst oder weist der Zweikomponenten-Korrosionsschutzlack folgende Zusammensetzungen auf:
- 95 bis 100 Gew.-% plättchenartige Zink-haltige Pigmente, wobei sich die Gew.-% auf das Gesamtgewicht der vorhandenen Metallpigmente beziehen; oder
- Plättchenartige Zink-haltige Metallpigmente und Zink-haltiger Metallstaub, wobei das Gewichtsverhältnis des Zink-haltigen Metallstaubs zu den plättchenartigen Zink-haltigen Metallpigmenten in einem Bereich von 0 : 1 bis 1 : 1 liegt und der Gewichtsanteil von Zink in den plättchenartigen Zink-haltigen Metallpigmenten und im Zink-haltigen Metallstaub vorzugsweise jeweils wenigstens 60 Gew.-%, wobei sich die Gew.-% jeweils auf das Gesamtgewicht der plättchenartigen Zink-haltigen Metallpigmente bzw. des Zink-haltigen Metallstaubes beziehen, beträgt; oder
- Plättchenartige Zink-haltige Metallpigmente und plättchenartige Aluminium-haltige Pigmente, wobei das Gewichtsverhältnis der plättchenartigen Aluminium-haltigen Metallpigmente zu den plättchenartigen Zink-haltigen Pigmenten in einem Bereich von 0 : 1 bis 0,3 : 1 liegt und der Gewichtsanteil von Zink in den plättchenartigen Zink-haltigen Metallpigmenten bzw. der Gewichtsanteil von Aluminium in den plättchenartigen Aluminium-haltigen Pigmenten vorzugsweise jeweils wenigstens 60 Gew.-%, wobei sich die Gew.-% jeweils auf das Gesamtgewicht der plättchenartigen Zink-haltigen Metallpigmente bzw. der plättchenartigen Aluminium-haltigen Pigmente beziehen, beträgt; oder
- Plättchenartige Zink-haltige Metallpigmente, plättchenartige Aluminumhaltige Pigmente und Zink-haltiger Metallstaub, wobei das Gewichtsverhältnis der plättchenartigen Aluminium-haltigen Pigmenten, des Zink-haltigen Staubes und der plättchenartigen Zink-haltigen Metallpigmente zueinander in einem Bereich von 0 : 0 : 1 bis 0,3 :0,5 : 1 liegt und der Gewichtsanteil von Zink in den plättchenartigen Zink-haltigen Metallpigmenten, der Gewichtsanteil von Aluminium in den plättchenartigen Aluminium-haltigen Pigmenten und der Gewichtsanteil von Zink im Zink-haltigen Metallstaub vorzugsweise jeweils wenigstens 60 Gew.-%, wobei sich die Gew.-% jeweils auf das Gesamtgewicht der plättchenartigen Zink-haltigen Metallpigmente, der plättchenartigen Aluminium-haltigen Pigmente bzw. des Zink-haltigen Metallstaubes beziehen, beträgt.

Weiterhin ist bevorzugt, dass die plättchenartigen Zink-haltigen Metallpigmente einen Zinkgehalt von wenigstens 75 Gew.-%, bevorzugt wenigstens 85 Gew.-%, weiter bevorzugt wenigstens 95 Gew.-%, jeweils bezogen auf das Gewicht des plättchenartigen Zink-haltigen Metallpigmentes, aufweisen.

Plättchenartige Aluminium-haltige Metallpigmente ergänzen bereits in relativ kleinen Mengen aufgrund ihrer Barrierewirkung sehr gut die Korrosionsschutzwirkung der gesamten Korrosionsschutzbeschichtung. Da Aluminium-haltige Pigmente oder Aluminiumpigmente aufgrund ihrer äußerst stark passivierenden Oxidschicht nicht in zuverlässiger Weise als Opferanode am Korrosionsschutz teilnehmen können, ist es erfindungsgemäß bevorzugt, den Anteil an plättchenartigen, Aluminium-haltigen Pigmenten in dem erfindungsgemäßen Zweikomponenten-Korrosionsschutzlack zu begrenzen. Als sehr geeignet hat sich Anteil von 0 bis 15 Gew.-%, weiter bevorzugt von 5 bis 10 Gew.-% erwiesen, wobei sich die Angabe Gew.-% auf das Gewicht des gesamten Zweikomponenten-Korrosionsschutzlackes bezieht.

Die plättchenartigen Aluminium-haltigen Pigmente sind vorzugsweise plättchenartige Aluminiumpigmente, die durch Vermahlung von Alumiumgrieß hergestellt sind, mit einem Gehalt von 98 bis 100 Gew.-% Aluminium.

Die plättchenartigen Zink-haltigen Metallpigmente umfassenden Metallpigmente können sowohl der Epoxysilankomponente (Komponente A) als auch dem aminischen Härter (Komponente B) oder beiden Komponenten zugegeben werden. Bei einer bevorzugten Variante werden die plättchenartigen Zink-haltigen Metallpigmente umfassenden Metallpigmente ausschließlich der Epoxysilankomponente zugegeben. Die Epoxysilankomponente ist weniger reaktiv. Bei einem Zusatz der plättchenartigen Zink-haltigen Metallpigmente umfassenden Metallpigmente zum aminischen Härter oder Aminhärter ist auf weitgehende Wasserfreiheit zu achten, da andernfalls eine Reaktion mit den Metallpigmenten kaum zu verhindern ist.

Der Wassergehalt des Zweikomponenten-Korrosionsschutzlackes liegt unter 5 Gew.-% bezogen auf das Gewicht des gesamten Lackes. Bei einer bevorzugten Variante liegt er bei weniger als 3 Gew.-%, vorzugsweise unter 1 Gew.-%, weiter bevorzugt unter 0,5 Gew.-% und besonders bevorzugt unter 0,3 Gew.-%, jeweils bezogen auf das Gewicht des gesamten Lackes. Durch diese niedrigen Wassergehalte ist eine vorzeitige Oxidation der Metallpigmente ausgeschlossen. Weiterhin wird eine unkontrollierte Reaktion der Epoxysilane verhindert.

Die bei der vorliegenden Erfindung verwendeten plättchenartigen Zink-haltigen Metallpigmente, vorzugsweise plättchenartige Zinkpigmente, besitzen Längsausdehnungen, wie sie mittels Laserbeugungsmethoden (vorzugsweise Gerät Cilas 1064, der Fa. Cilas) ermittelt werden, von vorzugsweise 5 bis 100 µm, bevorzugt von 8 bis 80 µm und besonders bevorzugt von 10 bis 50 µm. Diese Werte beziehen sich auf den d₅₀-Wert der Summendurchgangsverteilung der Größenverteilung. Die Dicke der Pigmente beträgt 0,05 bis 5 µm und bevorzugt 0,1 bis 1 µm.

Die plättchenartigen Zink-haltigen Metallpigmete können auch in Form von Zinklegierungen vorliegen. Bevorzugt sind dabei Legierungen von Zink mit Aluminium, Zinn und/oder Mangan. Der Anteil von Zink an der Zinklegierung beträgt vorzugsweise wenigstens 60 Gew.-%, weiter bevorzugt wenigstens 80 Gew.-%. Hersteller derartiger Zinklegierungspigmente ist die Fa. Doral, Schweiz.

Die plättchenartigen Zink-haltigen Metallpigmente umfassenden Metallpigmente können in Form von weitgehend trockenen Pulvern oder Pasten eingesetzt werden. Bevorzugt werden Pulver eingesetzt, da hierdurch keine organischen Lösemittel in den Korrosionsschutzlack eingetragen werden. Gängige Lösemittel von Metallpigmentpasten sind Kohlenwasserstoffe, wie beispielsweise Testbenzin, oder aromatische Kohlenwasserstoffe, wie beispielsweise Solvent Naphta. Art und Menge des Lösemittels des erfindungsgemäßen Korrosionsschutzlackes sollten bestimmt werden, um nicht in unkontrollierter Weise durch die verwendeten Komponenten unbeabsichtigt eingetragen zu werden.

Als Lösemittel des erfindungsgemäßen Korrosionsschutzlackes können beispielsweise Alkohole wie beispielsweise Methanol, Ethanol, 1-Butanol oder Ester, bevorzugt Acetatester wie beispielsweise Methoxybutylacetat, aliphatische Kohlenwasserstoffe wie beispielsweise Testbenzin oder aromatische Kohlenwasserstoffe wie beispielsweise Xylol oder Solvent Naphta eingesetzt werden. Ebenso und in bevorzugter Weise werden Mischungen der vorstehend genannten Lösemittel verwendet.

Gemäß einer bevorzugten Weiterbildung der Erfindung ist das mindestens eine Epoxysilan eine Verbindung der allgemeinen Formel (I)

R¹ₐR²_{b}SiX_{(4-a-b)} (I)

Hierbei steht R¹ für einen nicht hydrolysierbaren Rest, R² für einen mindestens eine Epoxygruppe tragenden, nicht hydrolysierbaren Rest und X für gleiche oder voneinander verschiedene Reste, die ausgewählt sind aus der Hydroxylgruppe und hydrolysierbaren Substitutionsprodukten einer Hydroxylgruppe, wobei a ganzzahlige Werte von 0 bis 3 und b ganzzahlige Werte von 1 bis 3 annehmen können und a und b zusammen den Wert 1, 2 oder 3 haben.

Gemäß einer weiteren bevorzugten Ausführungsform liegt das Epoxysilan mit der allgemeinen Formel (I) in oligomere oder polymerer Form vor, wobei die Einheiten über Si-O-Si-Brücken miteinander verbunden sind.

Bei einer bevorzugten Ausführungsform ist a gleich 0 und b gleich 1.

Der Rest X besteht vorzugsweise aus OH-, Halogen- oder aus Alkoxygruppen mit 1 bis 6, bevorzugt mit 1 bis 3, C-Atomen. Bevorzugt sind hierbei Alkoxygruppen und besonders bevorzugt sind Methyl- und/oder Ethylalkoxygruppen. Der bei der Hydrolyse der Alkoxygruppen frei werdende Alkohol wird bei einer bevorzugten Variante abdestilliert, so dass das Epoxysilan im wesentlichen frei von Lösungsmitteln ist.

Die Gruppe R² ist bevorzugt ein Glycidyl- oder ein Glycidyloxy-(C₁ bis C₂₀)-alkylen-Rest. Insbesondere handelt es sich um einen β-Glycidyloxyethyl-, γ-Glycidyloxyproyl-, δ-Glycidyloxybutyl-, ε-Glycidyloxypentyl-, ω-Glycidyloxyhexyl- oder 2-(3,4-Epoxycyclohexyl)-ethyl-Rest.

Die Gruppe R¹ ist bevorzugt ausgewählt aus der Gruppe bestehend aus (C₁ - C₄₀)-Alkyl-, -fluorierte Alkyl-, -teilfluorierte Alkyl-; (C₂ - C₄₀)-Alkenyl-, -Alkinyl-; (C₆ - C₃₆)-Aryl-, fluorierte -Aryl-, teilfluorierte -Aryl-; (C₇- C₄₀)Alkylaryl-, -Arylalkyl-, -fluorierte-Alkylaryl-, -teilfluorierte -Alkylaryl-; (C₈-C₄₀)-Alkenylaryl-, -Arylalkinyl-, -Alkinylaryl-; (C₅-C₄₀)-Cycloalkyl-, -Alkylcycloalkyl- und -Cycloalkylalkylgruppen.

Für a = 2 können die R¹-Gruppen gleich oder verschieden voneinander sein, sind jedoch bevorzugt gleich. Bevorzugt ist R¹ gleich Methyl, Ethyl oder Propyl oder a =0. Besonders bevorzugt werden aufgrund ihrer leichten Verfügbarkeit als Epoxysilane und/oder Epoxysilikone Oligomere von γ-Glycidyloxypropyltrimethoxysilan oder γ-Glycidyloxypropyltriethoxysilan oder deren Mischungen eingesetzt. γ-Glycidyloxypropyltrimethoxysilan ist kommerziell beispielsweise erhältlich unter den Namen Dynasylan GLYMO von der Firma Degussa (Untere Kanalstrasse 3, D-79618 Rheinfelden).

Das verwendete Epoxysilan oder Epoxysilangemisch ist vorzugsweise bei Anwendüngstemperaturen von ca. 0 bis 40 °C flüssig. Andernfalls wäre der Zusatz von Lösemitteln nötig, der jedoch bei dem erfindungsgemäßen Korrosionsschutzlack so gering wie möglich gehalten werden soll. Bei der erfindungsgemäßen Komponente A werden die plättchenartigen Zink-haltigen Metallpigmente umfassenden Metallpigmente in dem vorzugsweise flüssigen Epoxysilan dispergiert, ohne dass weiteres Lösemittel zugesetzt werden muß. Bevorzugt ist die Komponente A im wesentlichen lösemittelfrei. Die Rückstände von Alkoholen, die nach der Hydrolyse der Epoxysilane und nach der Abdestillation des Alkohols verbleiben können, liegen bevorzugt unter 1 Gew.-%, bezogen auf das Gewicht des gesamten Korrosionsschutzlackes. Der Lösemittelanteil beträgt insgesamt 0 bis maximal 40 Gew.-%, bevorzugt 0,5 bis 20 Gew.-%, weiter bevorzugt von 0,5 bis 10 Gew.% und besonders bevorzugt von 0, 6 bis 5 Gew.-%, bezogen auf das Gewicht des gesamten Korrosionsschutzlackes.

Bei einer weiteren bevorzugten Ausführungsform wird ein Teil des Epoxysilans mit Verbindungen, die polymerchemisch mit Epoxygruppen reaktive Funktionalitäten besitzen, umgesetzt. Derartige Funktionalitäten sind beispielsweise Hydroxy-, Isocyanat-, geblocktes Isocyanat- oder die Aminogruppe. Auch nacht einem Umsetzen mit derartigen funktionellen Gruppen müssen jedoch stets noch genügend reaktive Epoxygruppen übrig bleiben, um für die Härtungsreaktion mit dem aminischen Härter oder Aminhärter zur Verfügung zu stehen.

Bei einer weiteren bevorzugten Ausführungsform wird ein Teil des Epoxysilans zunächst mittels eines Sol-Gel-Prozesses hydrolysiert und oligomerisiert und anschließend mit aromatischen Polyolen gemischt und/oder umgesetzt. Derartige Systeme sind in der DE 100 39 404 A1 beschrieben, die hiermit unter Bezugnahme aufgenommen ist. Bei einer weiteren bevorzugten Ausführungsform werden die oligomerisierten Epoxysilane mit Bisphenol A und/oder dessen Derivaten gemischt und/oder umgesetzt. Das Molverhältnis der Epoxygruppen der Silan zu den Hydroxydgruppen des aromatischen Polyols beträgt beispielsweise 1,1 : 1. bis 2:1, bevorzugt 1,2 : 1 bis 1,6 : 1.

Die Epoxygruppen müssen hierbei zahlenmäßig immer gegenüber den Hydroxydgruppen überschüssig sein, um noch zur weiteren späteren Aushärtung mit dem aminischen Härter zur Verfügung zu stehen.

Weiterhin können die Epoxysilane auch mit anderen organofunktionellen Silanen zu Silikonen gemischt und/oder umgesetzt werden.

Als organofunktionelle Silane werden bevorzugt (C₁-C₄₀)Alkyl-, -fluorierte Alkyl-, -teilfluorierte Alkyl-; (C₂-C₄₀)-Alkenyl-, -Alkinyl-; (C₆-C₃₆)-Aryl-, fluorierte -Aryl-, -teilfluorierte -Aryl-; (C₇-C₄₀)-Alkylaryl-, -Arylalkyl-, -fluorierte -Alkylaryl-, -teilfluorierte -Alkylaryl-; (C₈-C₄₀₋Alkenylaryl-, -Arylalkinyl-, -Alkinylaryl-; (C₅-C₄₀)-Cycloalkyl-, -Alkylcycloalkyl-, -Cycloalkylalkylsilane verwendet.

Derartige Silane hydrophobieren die Korrosionsschutzlackierung zusätzlich und können dadurch die Korrosionsschutzwirkung steigern.

Weiterhin können den Epoxysilanen auch Tetraalkoxysilane und/oder oligomere Abkömmlinge dieser Verbindungen zugesetzt werden. Als Tetraalkoxysilane finden vor allem Tetramethoxysilan und Tetraethoxysilan bevorzugt Verwendung. Ein Beispiel für ein vorhydrolysiertes Tetraalkoxysilan ist TES 55 der Fa. Wacker. Hier handelt es sich um ein Oligomeres mit durchschnittlich neun Siliciumatomen. Weiterhin können auch SiO₂-Teilchen mit durchschnittlichen Durchmessern von 1 bis 40 nm, bevorzugt von 5 bis 20 nm dem Epoxysilan zugesetzt werden. Diese Teilchen vernetzen aufgrund ihrer oberflächlichen Silanolgruppen mit den Epoxysilanen und tragen zu verbesserten mechanischen Eigenschaften des erfindungsgemäßen Korrosionsschutz-lackes bei.

Verwendet werden können auch Epoxysilangemische, wie sie in den US 6,344,520, DE 19 35 471 A1 und US 5,952,439, die hiermit unter Bezugnahme aufgenommen sind, offenbart sind. Hierbei sind jedoch von dem jeweiligen Epoxysilangemisch vorzugsweise zuvor überschüssige Alkohole solange abzudestillieren, bis der Lösemittelgehalt unter 20 Gew.-%, vorzugsweise unter 10 Gew.%, weiter bevorzugt unter 5 Gew.-% liegt.

Geeignet sind insbesondere Epoxysilanlackkomponenten der Firma NTC (Nano Tech Coatings GmbH, Dirminger Straße 17, D-66636 Tholey, Deutschland). Weiterhin sind geeignete Beispiele das Silikonprodukt Silres HP 1000 der Fa Wacker (Wacker Silicones Division, 3301 Sutton Road, Adrian, Michigan 49221-9397, USA), bei dem Phenylsilane mit Epoxysilanen oligomeriert sind oder Silres HP 2000. Ebenfalls ist Silkoftal^{®} ED der Fa Tego (Tego Chemie Service, Goldschmidtstraße 100, D-45127 Essen, Deutschland) geeignet.

Die Komponente B enthält im wesentlichen mindestens einen aminischen Härter oder Aminhärter. Hier können prinzipiell alle bekannten aminischen Härter eingesetzt werden. Als aminische Härter können beispielsweise Polyamine wie Diethylentriamin, Triethylentetramin, Tetraethylenpentamin, Petaethylenhexamin, Propylendiamin, Dipropylentriamin, Bis-(aminopropyl)-amin, 1,4-Bis-(3'-aminopropylypiperazin, N,N-Bis-(3-aminopropyl)ethylendiamin, N,N,2,2,-Tetramethyl-1,3-propandiamin, N,N',N",-Trimethylethylendiamin, Neopentandiamin, 2-Methyl-1,5-pentandiamin, 1,3-Diaminopentan, Hexamethylendiamin, Polyethylenimine sowie cycloaliphatische Amine wie beispielsweise Isophorondiamin, 1,2- bzw. 1,3-Diaminocyclohexan, 1,4-Diamino-3,6,-diethylcyclohexan, 1-Cyclohexyl-3,4-diaminocyclohexan, 3-Amino-1-cyclohexylaminopropan verwendet werden.

Besonders bevorzugt sind als aminische Härter jedoch Aminosilane. Kommerziell erhältlich sind dies beispielsweise viele Vertreter der von der Fa. Degussa, Rheinfelden hergestellten und unter dem Handelsnamen "Dynasylan^{®}" vertriebenen Produkte bzw. der von der Fa. OSi Specialties produzierten Silquest^{®}-Silane oder der Fa. Wacker produzierten GENOSIL^{®}-Silane.

Beispiele hierfür sind Aminopropyltrimethoxysilan (Dynasylan AMMO; Silquest A-1110), Aminopropyltriethoxysilan (Dynasylan AMEO) oder N-(2-Aminoethyl)-3-aminopropyltrimethoxysilan (Dynasylan DAMO, Silquest A-1120) oder N-(2-Aminoethyl)-3-aminopropyltriethoxysilan, Triamino-funktionelles Trimethoxysilan (Silquest A-1130), bis-(gamma-Trimethoxysilylpropyl)amin (Silquest A-1170), N-ethylgamma-aminoisobutyltrimethoxysilan (Silquest A-Link 15), N-Phenyl-gammaaminopropyltrimethoxysilan (Silquest Y-9669), 4-Amino-3,3-dimethylbutyltrimethoxysilan (Silquest Y-11637), (N-Cyclohexylaminomethyl)triethoxysilan (Genosil XL 926), (N-Phenylaminomethyl)trimethoxysilan (Genosil XL 973) und deren Mischungen.

Der Aminhärter wird in Mengen von 2 bis 15 Gew.-%, bevorzugt von 6 bis 12 Gew.-% und weiter bevorzugt von 7 bis 10 Gew-% bezogen auf das Gewicht des gesamten Zweikomponenten-Korrosionsschutzlackes eingesetzt.

Bei einer bevorzugten erfindungsgemäßen Weiterbildung enthält der erfindungsgemäße Zweikomponenten-Korrosionsschutzlack mindestens ein weichmachendes Additiv. Das weichmachende Additiv wird bevorzugt der Komponente A zugesetzt, kann aber auch der Komponente B oder sowohl Komponente A als auch Komponente B zugesetzt werden.

Das mindestens eine weichmachende Additiv wird vorzugsweise aus der Gruppe, bestehend aus Weichmacher, Plastifizierharz und deren Mischungen, ausgewählt.

Das mindestens eine weichmachende Additiv ist vorzugsweise in Mengen von 1 bis 15 Gew.-%, weiter bevorzugt von 2 bis 10 Gew.-% und besonders bevorzugt von 3 bis 8 Gew-%, bezogen auf das Gewicht des gesamten Zweikomponenten-Korrosionsschutzlackes, vorhanden.

Als Weichmacher können übliche Verbindungen wie primäre Weichmacher wie z.B. Phthalsäure- und Trimellithsäure- haltige Weichmacher oder deren Ester oder sekundäre Weichmacher wie beispielsweise Adipin-, Azelain-, Sebacinsäureester, Citratester oder Alkylfettsäureester, z.B. Butyloleat oder Butylester der acetylierten Ricinolfettsäure, verwendet werden.

Im einzelnen können beispielsweise verwendet werden:
Dioctylphosphat, Diethylphthalat, Dibutylphthalat, Diisobutylphthalat, Di-2-ethylhexylphthalat, Dioctylphthalat, Diphenylphthalat, Dicyclohexylphthalat, Butylbenzylphthalat, Diisooctylphthalat, Dinonylphthalat, Diisononylphthalat, Diisodecytphthalat, Diisotridecylphthalat, Butylbenzylphthalat, Diisobutyladipat, Dioctyladipat, Di-2-ethylhexyladipat, Diisodecyladipat, Dibutylsebacat, Dioctylsebacat, Di-2-ethylhexylsebacat, Acetylbutylcitrat, Tri-(2-ethylhexyl)trimellitat oder Tri-n-octyldecyltrimellithat.

Weiterhin können als Weichmacher bevorzugt Epoxidweichmacher verwendet werden. Hierbei sind insbesondere hochmolekulare Epoxidweichmacher aus epoxidierten Triglyceriden sowie niedrigmolekulare Typen aus epoxidierten Estern der Tallölfettsäure oder der Ölsäure bevorzugt. Beispiele hierfür sind epoxidiertes Sojaöl, epoxidiertes Leinöl oder epoxidiertes Oktyloleat. Derartige Weichmacher verhindern eine zu starke Sprödigkeit der Korrosionsschutzschicht nach Aushärten der Epoxysilane.

Unter Plastifizierharzen, die man teilweise auch als Haftharze bezeichnet, werden nieder- bis hin zu hochmolekulare Harze, die i.d.R. nur linear miteinander vernetzt sind, bezeichnet. Derartige Verbindungen und ihre Wirkweise werden beispielsweise beschrieben in H. Kittel, Lehrbuch der Lacke und Beschichtungen Band III, Verlag W.A. Colomb 1976. Sie zeichnen sich insbesondere durch ihre sehr hohe Migrationsbeständigkeit aus und sind daher besonders bevorzugt.

Es handelt sich hierbei bevorzugt um Polyester von langkettigen Dicarbonsäuren wie beispielsweise Adipin-, Sebacin-, Azelain-, Brassyl- und/oder Phthalsäure mit Diolen wie beispielsweise 1,3-Butandiol, 1,2-Propandiol, 1,4-Butandiol und/oder 1,6-Hexandiol oder mit Glycolen wie beispielsweise 1,2-Propylenglycol, 1,3,-Butylenglycol, 1,4,-Butylenglycol oder Neopentylglycol. Derartige Polyester besitzen bevorzugt Molekulargewichte von 200 bis 15.000 g/mol und besonders bevorzugt von 1.800 bis 13.000 g/mol. Weiterhin sind bevorzugt niedrigmolekulare Polyester mit einem Molekulargewicht von 200 bis 700 g/mol. Ebenfalls bevorzugt sind hochmolekulare Polyester mit einem Molekulargewicht von 6.000 bis 12.000 g/mol. Beispiele hierfür sind Haftharz LTW (Weichmacherharz, Fa. Creanova Spezialchemie GmbH, D-45764 Marl, Deutschland) oder K-Flex XM-B301 (Weichmacherharz, Fa. King Industries P.O. Box 588 Norwalk, CT 06852, Großbitannien).

Weiterhin können Citronensäure- wie Acetyltributylcitrat und Weinsäureester oder Milchsäureester verwendet werden.

Vorzugsweise werden Weichmacher in dem erfindungsgemäßen Zweikomponenten-Korrosionsschutzlack verwendet. Es hat sich überraschend gezeigt, daß bei einer Erhöhung der Flexibilität des ausgehärteten Korrosionsschutzfilmes die Korrosionsschutzwirkung erheblich verbessert werden kann. Ferner wurde überraschenderweise gefunden, dass die Haftung der erfindungsgemäßen Korrosionsschutzzusammensetzung auf Stahluntergründen durch den Zusatz von Weichmachern verbessert wird. Bei einer weiteren erfindungsgemäßen Ausführungsformen kann der Zweikomponenten-Korrosionsschutzlack zusätzlich weitere Additive wie Dispergierhilfsmittel, Netzmittel, Verlaufsmittel, Untergrundbenetzmittel, Füllstoffe und/oder weitere Bindemittel wie Reaktiwerdünner enthalten.

Als Dispergierhilfsmittel können entsprechende übliche Lackadditive verwendet werden.

Die Menge an verwendeten Additiven beträgt vorzugsweise 0-7 Gew.-%, bevorzugt 1-6 Gew.-% und besonders bevorzugt 2-5 Gew.-%, bezogen auf das Gewicht des gesamten Korrosionsschutzlackes.

Als Füllstoffe können beispielsweise anorganische Füllstoffe wie Talkum, Glimmer, Kaolin, etc. verwendet werden.

Die Menge an verwendetem Füllstoff beträgt vorzugsweise 0-10 Gew.-% und weiter bevorzugt 0-5 Gew.-%.

Bei dem erfindungsgemäßen Verfahren zur Herstellung des Zweikomponenten-Korrosionsschutzlackes kann eine kontrollierte Oligomerisierung des Epoxysilanes zu Epoxysilikonen auch durch Zugabe eines geeigneten Katalysators erreicht werden. Als solcher kommen organische Amine oder bevorzugt Säuren, wie beispielsweise Essigsäure in Frage. Der Katalysator darf nur in sehr geringen Mengen zugesetzt werden, maximal 5 Gew.-% bezogen auf das Epoxysilan und/oder Epoxysilikon.

Der erfindungsgemäße Zweikomponenten-Korrosionsschutzlack wird verwendet zur Herstellung von Korrosionsschutzbeschichtungen. Der Zweikomponenten-Korrosionsschutzlack eignet sich insbesondere für den schweren Korrosionsschutz. Als Untergründe dienen vorwiegend metallische Untergründe wie Stahl oder Eisen. Beispiele für die Untergründe sind Eisenbahnbrücken oder Stromleitungsmasten. Insbesondere für den Fall, das der Decklack ebenfalls aus dem Zweikomponenten-Lack, allerdings ohne Pigmentierung mit plättchenartigen Zink-haltigen Metallpigmente umfassenden Metallpigmenten besteht, sind noch weitere Anwendungsmöglichkeit denkbar. Dieser Zweikomponenten-Lack besitzt antifouling, d.h. Algenwuchs verhindernde Eigenschaften. Dadurch ist auch ein Einsatz als Schiffsgrundierungen oder zur Lackierung von Hafenbeckenanlagen denkbar.

Insbesondere findet der erfindungsgemäße Zweikomponenten-Korrosionsschutzlack sowie ein Decklack Verwendung zur Herstellung von zweischichtigen Korrosionsschutzbeschichtungen.

Der Zweikomponenten-Korrosionsschutzlack wird hierbei durch Streichen, Rollen oder Lackieren, vorzugsweise durch airless-Lackieren auf den Untergrund aufgebracht. Der Untergrund kann zuvor bevorzugt gereinigt werden, wobei hier eine Sandstrahlreinigung bevorzugt ist.

Gegenstand der vorliegenden Erfindung ist somit auch eine Korrosionsschutzbeschichtung, die aus einer ersten Beschichtung, welche aus dem erfindungsgemäßen Zweikomponenten-Korrosionsschutzlack hergestellt ist, und aus einer weiteren Decklackschicht besteht.

Des weiteren umfasst die vorliegende Erfindung auch mit einem Zweikomponenten-Korrosionsschutzlack versehene Gegenstände wie lackierte Masten, Brücken, Brückenteile, Bauteile, Gebäudeteile, etc..

Die Schichtdicke dieser gesamten Korrosionsschutzbeschichtung ist außerordentlich dünn und beträgt lediglich 150 bis 250 µm, bevorzugt 160 bis 200 µm. Im Stand der Technik sind hingegen bei vierschichtigen Korrosionsschutzbeschichtungen deutlich höhere Schichtdicken üblich. Dies zeigt sich u.a. darin, dass in der Norm DIN EN ISO 12944-5 im Teil C5-I (lang) eine Mindestgesamtschichtdicke von 240 - 500 µm für Epoxysysteme vorgeschrieben wird.

Die Vorteile der erfindungsgemäßen zweischichtigen Korrosionsschutzbeschichtung sind folgende:
- Zeitersparnis, da die Applikation in der Hälfte der Zeit im Vergleich zu einer vierschichten Korrosionschutzbeschichtung erfolgt.
- Geringere Peronalkosten aufgrund der deutlich verringerten Lackierarbeiten. Die Personalkosten nehmen bei den gängigen billigen Korrosionsschutzbeschichtungen den weitaus größten Raum der Kosten ein (ca. 90%).
- Gewichtsersparnis am beschichteten Objekt. Eine Eisenbahnbrücke üblicher Größe braucht durchschnittlich einige Tonnen an Lack, um vierschichtig beschichtet zu werden. Bei Verwendung des erfindungsgemäßen Zweikomponenten-Korrosionsschutzlackes können bei der gleichen Brücke etwa die Hälfte des sonst üblicherweise verwendeten Lackes eingespart werden.

Die folgenden Beispiele erläutern die Erfindung, ohne sie jedoch zu beschränken.

### Erfindungsgemäßes Beispiel 1 (Zweikomponenten-Korrosionsschutzlack):

### Komponente A:

### Epoxysilanstammkomponente 1:

535 g γ-Glycidyloxypropyltrimethoxysilan (GPTS) werden im Ansatzgefäß vorgelegt und unter Rühren mit 61,5 g 0,1 M HCl versetzt. Bei der exothermen Reaktion erwärmt sich der Ansatz innerhalb weniger Minuten und wird einphasig. Nach 10 min werden 203,5 g Bisphenol-A langsam hinzugegeben und unter weiterem Rühren gelöst. Die Mischung wird auf 80 °C erhitzt und 174 g Alkohol (Methanol) abdestilliert.

Der Wassergehalt der Mischung wurde nach der Karl-Fischer-Methode ermittelt und lag bei unter 1 Gew.-% Wasser.

Es wurden in einem Kunststoffbecher 40 g Zinkflake GTT (plättchenartiges Zinkpulver, d₅₀ = 13 µm, Fa. Eckart GmbH & Co. KG) und 10 g Standart Lack NAT NL (Aluminiumflakepulver, d₅₀ = 40 µm, Fa. Eckart GmbH & Co. KG) vorgelegt. Folgende Stoffe wurden nacheinander unter zunächst vorsichtigem und dann stärkerem Rühren (Dissolver bis zu 2.000 U/min) zugegeben:
- 2g Byk 180 (viskositätsverminderndes Netz- und Dispergiermittel, Fa. Byk-Chemie GmbH, Postfach 100245, D-46462 Wesel, Deutschland))
- 16,4 g Epoxysilanstammkomponente 1 (erhältlich bei Fa. NTC Nano Tech Coatings GmbH, Dirminger Straße 17, D-66636 Tholey, Deutschland)
   Anschließend rührte man solange, bis eine vollständig homogene Dispersion erhalten wurde.

Dann wurden nacheinander unter Rühren zugegeben:
- 4 g K-Flex XM-B301 (Weichmacherharz, Fa. King Industries P.O. Box 588 Norwalk, CT 06852, Großbitannien)
- 1 g Modaflow Resin (Verlaufsmittel, Fa. Solutia, St. Louis, Missouri, 63141, USA)
- 17 g Epoxysilanstammkomponente 1
- 0,5 g Byk 333 (Untergrundbenetzer)
- 0,5 g Disperbyk 163 (Netzmittel)

Anschließend wurden alle Komponenten noch 10 min bei 1.500 U/min verrührt.

### Komponente B:

Hier wurden 8,6 g ge-Aminopropyltrimethoxysilan (Dynasilan AMEO, Fa. Degussa) verwendet.

### Erfindungsgemäßes Beispiel 2 (Zweikomponenten-Korrosionsschutzlack):

Wie erfindungsgemäßes Beispiel 1, jedoch wurden statt 40 g Zinkflake GTT lediglich 32 g Zinkflake GTT und zusätzlich 8 g Zinkstaub (Zinkstaub 17640, Fa. Doral, Schweiz) verwendet.

### Erfindungsgemäßes Beispiel 3 (Zweikomponenten-Korrosionsschutzlack):

Wie erfindungsgemäßes Beispiel 1, jedoch wurde statt der Epoxysilanstammkomponente 1 die Epoxysilanstammkomponente 2 in gleichen Mengen eingesetzt. Hierbei handelt es sich um das Siloxanbindemittel Silikoftal^{®} ED (Fa. Tego Chemie Service GmbH, Goldschmidtstrasse 100, D-45127 Essen, Deutschland). Der Festkörperanteil beträgt 97,5 - 99,5 Gew.%.

### Erfindungsgemäßes Beispiel 4 (Zweikomponenten-Karrosionsschutzlack):

Wie erfindungsgemäßes Beispiel 2, jedoch wurde statt der Epoxysilanstammkomponente 1 die Epoxysilanstammkomponente 2 (Silikoftal^{®} ED) in gleichen Mengen eingesetzt.

### Erfindungsgemäßes Beispiel 5 (Zweikomponenten-Korrosionsschutzlack):

Wie erfindungsgemäßes Beispiel 1, jedoch wurde statt der Epoxysilanstammkomponente 1 die Epoxysilanstammkomponente 3 in gleichen Mengen eingesetzt. Hierbei handelt es sich um das Siloxanbindemittel Silres HP 1000 (Fa. Wacker, Burghausen, Deutschland).

### Erfindungsgemäßes Beispiel 6 (Zweikomponenten-Korrosionsschutzlack):

Wie erfindungsgemäßes Beispiel 2, jedoch wurde statt der Epoxysilanstammkomponente 1 die Epoxysilanstammkomponente 3 (Silres HP 1000) in gleichen Mengen eingesetzt.

### Vergleichsbeispiel 7:

Kommerziell erhältliche Zinkstaubgrundierung: EMD 152 Grau (Fa. Chemische Industrie, Erlangen, Deutschland).

Im folgenden wurden die Zweikomponenten-Korrosionsschutzlacke der Beispiele 1 bis 7 auf Stahlbleche mit einer Strahlung SA 2½ appliziert. Die Oberfläche der Stahlbleche muss- bei Betrachtung ohne Vergrößerung - frei sein von sichtbarem Öl, Fett und Schmutz und soweit frei von Zunder, Rost, Beschichtungen und artfremden Verunreinigungen, so dass verbleibende Spuren allenfalls noch als leichte, fleckige oder streifige Schattierungen zu erkennen sind.

Die folgende Tabelle gibt einen Überblick über die verwendeten Systeme:

**Tab. 1: Überblick über Applikationen**

| **Erfindungsgemäße Beispiel - Nr.** | **Verwendeter Basislack** **(Grundierung)** | **Verwendeter Decklack** | **Schichtdicke Basislack** **[µm]** | **Schichtdicke Deck-lack** **[µm]** | **Gesamt schichtdicke** **[µm]** |
|---|---|---|---|---|---|
| Erfindungsgemäßes Beispiel 8 | Erf.-gem. Beispiel 1 | 2K-Polyurethan-System* | 100 | 80 | 180 |
| Erfindungsgemäßes Beispiel 9 | Erf. Beispiel 1 | Stammkomponent e 1 und Komponente B aus dem erf. Beispiel 1 | 100 | 80 | 180 |
| Erfindungsgemäßes Beispiel 10 | Erf.-gem. Beispiel 2 | 2K-Polyurethan-system* | 120 | 80 | 200 |
| Erfindungsgemäßes Beispiel 11 | Erf.-gem. Beispiel 3 | " | 110 | 83 | 193 |
| Erfindungsgemäßes Beispiel 12 | Erf.-gem. Beispiel 4 | " | 125 | 78 | 203 |
| Erfindungsgemäßes Beispiel 13 | Erf.-gem. Beispiel 5 | " | 100 | 80 | 180 |
| Erfindungsgemäßes Beispiel 14 | Erf.-gem. Beispiel 6 | " | 110 | 80 | 190 |

| | | | | | |
|---|---|---|---|---|---|
| * ADH47 RAL 7030 Ching PU DecKlack mit Härter D101 (Fa. Chemischel industrie, Erlangen, Deutschland) 2K: zwei Komponenten | | | | | |

### Vergleichsbeispiel 15:

Es wurde ein klassischer Korrosionsschutzaufbau nach DIN EN ISO 12944-5 (C5-I lang) verwendet, welcher die BAST Freigabe besitzt.

Es handelt sich hierbei um einen 4-Schicht-Aufbau, bestehend aus:
- Zinkstaubgrundierung aus Vergleichsbeispiel 7 mit Härter M 026; Trockenschichtdicke: 80 µm
- Zwischenanstrich 1 (Eisenglimmer) Ching-EP-Eisenglimmer Deckbeschichtung EMD 30-HS grau DB703K mit Härter M 031; Trockenschichtdicke: 160 µm
- Zwischenanstrich 2 (Eisenglimmer) Ching-EP-Eisenglimmer-Deckbeschichtung EMD 40-HS grau DB704K mit Härter M 040; Trockenschichtdicke: 160 µm
- 2K PU Decklack (Ching-PUR Deckbeschichtung, ADH47 RAL 7030, mit Härter D101; Trockenschichtdicke: 80 µm

Alle Komponenten sind erhältlich von der Fa. Chemische Industrie, Erlangen, Deutschland.

### Vergleichsbeispiel 16:

I Es wurde der gleiche Aufbau wie bei dem Vergleichsbeispiel 15 verwendet, jedoch ohne den 2. Zwischenanstrich. Es handelt sich hierbei um einen 3-Schicht-Aufbau, bestehend aus:
- Zinkstaubgrundierung (aus vergleichendem Beispiel 7); Trockenschichtdicke: 80 µm
- Zwischenanstrich 1 (Eisenglimmer) Trockenschichtdicke: 160 µm
- 2K PU Decklack Trockenschichtdicke: 80 µm

Die Bleche der Vergleichsbeispiele 16 und 17 wurden nach dem Sandstrahlen in Ethylacetat gelagert. Kurz vor dem ersten Applikationsgang wurden diese heraus genommen und mit Luftdruck trocken geblasen. Mit einem Rosshaarpinsel wurde die Grundierung aufgetragen und mittels eines Naßfilmschichtdickenmeßgerät die benötigte Schichtstärke ermittelt.

Die Grundierung wurde 24 h bei Raumtemperatur getrocknet, bevor weitere Beschichtungen (Zwischenschichten bzw. Decklack) aufgebracht wurden. Jede Schicht wurde immer 24 h getrocknet bevor der nächste Gang aufgebracht wurde.

Bevor das fertige Blech den Belastungstests (Salzsprühtest, Schwitzwassertest usw) unterzogen wurde, lagerte es 1 Woche bei Raumtemperatur.

### Applikation der erfindungsgemäßen Beispiele:

Die Bleche wurden nach dem Sandstrahlen in Ethylacetat gelagert. Kurz vor dem ersten Applikationsgang wurden diese heraus genommen und mit Luftdruck trocken geblasen. Mit einer HVLP Handspritzpistote (Fa. SATA) und einem 2,5mm Düsenaufsatz wurde die Grundierung aufgetragen.
Luftfeuchtigkeit: 60%
Temperatur: 23°C
Luftdruck (Pistole): 4bar

Anschließend wurde die Grundierung 24 h bei Raumtemperatur getrocknet. Nachdem die Grundierung getrocknet war wurde ebenfalls mit einer HVLP-Handspritzpistole (Fa. SATA) und einem 1,3 mm Düsensatz der 2K-PU Decklack aufgebracht und 24 h bei Raumtemperatur getrocknet.

Bevor das fertige Blech den Belastungen (Salzsprühtest, Schwitzwassertest usw) unterzogen wurde, lagerte es 1 Woche bei Raumtemperatur.

Die Testbleche wurden gemäß der Prüfvorschrift ISO 12944 C5-I lang abgeprüft. Das "I" steht hierbei für Industrieatmosphäre (Verunreinigte Atmosphäre, die durch Ausstoß von örtlichen oder regionalen, korrosiven Industrieabgasen verunreinigt ist, wobei im Wesentlichen Schwefeldioxid gemeint ist).

### Diese Abprüfung beinhaltet:

- Einwirken von Chemikalien (ISO 2812-1) wird durch ISO 3231 ergänzt.
- Kondensieren von Wasserdampf (ISO 6270)
- Einwirken von neutralem Salzsprühnebel (ISO 7253)

Die Belastungszeiten betragen bei:

| | | |
|---|---|---|
| • | Salzsprühnebel | 2160 Stunden (90 Tage) |
| • | Wasserdampf | 720 Stunden (30 Tage) |
| • | Kesternichtest | 30 Zyklen (30 Tage) |

### Einzeltestbeschreibung:

### a) Kondensieren von Wasserdampf:

Die zu testenden Bleche wurden nach der Applikation und Aushärtung für 24 Stunden gelagert, um sicherzustellen, dass die Beschichtungen völlig ausgehärtet sind. Der Schwitzwassertest nach DIN 50017 wird unter hoher Feuchte durchgeführt. Hierdurch wird die Einwirkung von kondensiertem Wasserdampf auf die Beschichtung untersucht. Der Probenkörper (T< 40 °C) befindet sich in einer gesättigten Wasserdampfatmosphäre (40 °C), so dass es zur Kondensation der Luftfeuchtigkeit auf der Beschichtung kommt.

Die zu testenden Bleche wurden vor diesem Test am Rand mit Tesafilm abgeklebt, um zu vermeiden, dass Wasser von der Rückseite den Lack unterwandert.

Es ist nun zu prüfen, ob sich Blasen auf der Lackfilmschicht bilden oder weiße Flecken zum Vorschein kommen. Nach Testende wird sofort und nach 24h ein Gitterschnitt auf den belasteten Blechen durchgeführt. Hierbei wird nach der gängigen Beurteilung GT 0 - 5 (DIN 50017) ausgewertet, wobei GT 0 sehr gut und GT 5 sehr schlecht ist.

### b) Einwirken von neutralem Salzsprühnebel:

Die zu testenden Bleche wurden nach der Applikation und Aushärtung der Beschichtungen für 24 Stunden gelagert um sicherzustellen, dass diese völlig ausgehärtet sind. Die Sprühnebelprüfung ist eine in DIN 50021 speziell für den Lackbereich in DIN 53167 genormte Korrosionsprüfung, bei der man eine fein versprühte NatriumchloridLösung auf die Probe einwirken lässt. Auf eine geneigte Probe werden bei 40 °C, bezogen auf 80 cm² Fläche, 1,5 ml/h der Lösung mit Hilfe befeuchteter Pressluft gesprüht.

Die zu testenden Bleche wurden vor diesem Test am Rand mit Tesafilm abgeklebt, um zu vermeiden, dass Wasserdampf von der Rückseite den Lack unterwandert.

Die beschichteten Proben wurden mit definierten Verletzungen dem Test unterworfen. Schädigungen treten an Schwachstellen auf und werden anhand ihrer Unterwanderung beurteilt.

### c) Einwirken von Chemikalien (Kesternichtest):

Der Kesternichtest beinhaltet die Wechselbelastung von Schwitzwassertest und SO₂ Atmosphäre. Er wird gemäß DIN 50018 durchgeführt.

Nach der Belastung wird der Mittelwert an Massenverlust ermittelt und in g/m² angegeben. Die Abweichung der Einzelwerte darf nicht mehr als 20% betragen. Vorliegend wurde jedoch nach dem optischen Eindruck beurteilt (weißes Anlaufen).

### Gitterschnitttest:

Dies ist eine Methode zur Ermittlung der Haftfestigkeit von Beschichtungen. Hierbei werden gemäß DIN ISO 2409 mit einer scharfen Klinge mindestens 6 parallele Schnitte durch eine Beschichtung bzw. einen Beschichtungsaufbau hindurch bis zum jeweiligen Substrat geführt und anschließend im rechten Winkel dazu noch einmal mindestens 6 parallele Schnitte bis zum Untergrund durchgeführt. Dabei variiert der Abstand der parallelen Schnitte mit der Dicke der jeweiligen Beschichtung, beträgt jedoch mindestens 1 mm. Anschließend wird ein Klebeband bestimmter Art, z.B. Tesafilm, auf der Oberfläche mit leichtem Druck angebracht und anschließend ruckartig abgezogen. Bewertet wird nach dem Abziehen des Klebebandes die abgelöste Anzahl von Beschichtungsquadraten, falls diese nicht schon bei der Ausführung des Gitterschnittes abgeplatzt sind. Mit Kennwerten zwischen 0 = sehr gut und 5 = sehr schlecht, die durch einen Vergleich mit entsprechenden Bildvorlagen bestimmt werden, wird die Haftfestigkeit der geprüften Beschichtungen benotet.

Wie oben schon erwähnt, ist die Breite der einzelnen Schnittabstände abhängig von der Schichtstärke. Bei einer Schichtstärke von:

| | | |
|---|---|---|
| • | 0-60 µm | -> 1 mm Abstand |
| • | 60-120 µm | -> 2mm Abstand |
| • | > 120 µm | -> 3mm Abstand |

Im vorliegenden Fall hätte ein Gitterschnitt mit 3mm Schnittbreite durchgeführt werden müssen. Es wurde jedoch ein 2 mm Gitterschnitt verwendet, um die Ergebnisse eindeutiger zu machen und um unter verschärften Bedingungen die Unterschiede bei Becshichtungsqualitäten deutlicher zum Vorschein zu bringen.

### Testergebnisse:

### Schwitzwassertest:

Die Bleche wurden gemäß DIN 50017 durchgeführt und sofort, nach einer Stunde sowie 24 Stunden nach Testende einem Gitterschnitttest unterzogen.

**Tab. 2: Schwitzwassertestergebnisse (Gitterschnitt)**

| Probe | Blech 1 | | | Blech 2 | | | Blech 3 | | |
|---|---|---|---|---|---|---|---|---|---|
| | 0h | 1 h | 24 h | 0 h | 1 h | 24 h | 0 h | 1 h | 24 h |
| Erfindungsgemäßes Beispiel 8 | Gt 1 | Gt 1 | Gt 1 | Gt 2 | Gt 1 | Gt 1 | Gt 1 | Gt 1 | Gt 2 |
| Erfindungsgemäßes Beispiel 9 | Gt 1 | Gt 1 | Gt 0 | Gt 2 | Gt 1 | Gt 1 | Gt 1 | Gt 1 | Gt 1 |
| Erfindungsgemäßes Beispiel 10 | Gt 2 | Gt 1 | Gt 1 | Gt 2 | Gt 1 | Gt 1 | Gt 1 | Gt 1 | Gt 1 |
| Erfindungsgemäßes Beispiel 11 | Gt 2 | Gt 1 | Gt 1 | Gt 2 | Gt 1 | Gt 1 | Gt2 | Gt 1 | Gt 1 |
| Erfindungsgemäßes Beispiel 12 | Gt 2 | Gt 2 | Gt 1 | Gt 2 | Gt 2 | Gt 1 | Gt 2 | Gt 1 | Gt 1 |
| Erfindungsgemäßes Beispiel 13 | Gt 2 | Gt 2 | Gt 1 | Gt 2 | Gt 1 | Gt 1 | Gt 2 | Gt 1 | Gt 1 |
| Erfindungsgemäßes Beispiel 14 | Gt 2 | Gt 2 | Gt 1 | Gt 2 | Gt 2 | Gt 1 | Gt 2 | Gt 2 | Gt 1 |
| Vergleichs-Beispiel 15 | Gt 4 | Gt 4 | Gt 4 | Gt 4 | Gt 3 | Gt 3 | Gt 3 | Gt 1 | Gt 2 |
| Vergleichs-Beispiel 16 | Gt 4 | Gt 2 | Gt 2 | Gt 3 | Gt 3 | Gt 3 | Gt 3 | Gt 3 | Gt 3 |

Bei den erfindungsgemäßen Beispiele wiesen die Korrosionsschutzbeschichtungen mit Abstand die beste Haftung auf, verglichen mit der Korrosionsschutzbeschichtung gemäß Vergleichsbeispiel 15. Bei keinem Blech der erfindungsgemäßen Beispiele war eine Blasenbildung oder eine Farbtonveränderung erkennbar.

### Salzsprühtest:

Die Bleche wurden gemäß DIN 53167 abgeprüft und anschließend einem Gitterschnitt unterzogen.

Zudem wurden Bleche mit einer Korrosionsschutzbeschichtung mit einer Gesamtschichtstärke von insgesamt 100 µm versehen, um eine eventuelle Mindestschichtstärke festzustellen, die für einen guten Korrosionsschutz benötigt wird. Es wurde der Rostgrad angegeben, sowie die Länge der Unterwanderung an der definierten Verletzung.

**Tab. 3: Ergebnisse Salzsprühtest**

| Probe | Rostgrad *0-5* | | | Unterwanderung [mm] | | | Gitterschnitt | | |
|---|---|---|---|---|---|---|---|---|---|
| | Blech 1 | Blech 2 | Blech 3 | Blech 1 | Blech 2 | Blech 3 | Blech 1 | Blech 2 | Blech 3 |
| Erfindungsgemäßes Beispiel 8 | 1 | 1 | 0 | 0 | 0 | 0 | Gt 1 | Gt 1 | Gt 2 |
| Erfindungsgemäßes Beispiel 9 | 1 | 0 | 1 | 0 | 0 | 0 | Gt 3 | Gt 3 | Gt 2 |
| Erfindungsgemäßes Beispiel 10 | 1 | 1 | 1 | 1 | 1 | 0 | Gt 1 | Gt 1 | Gt 2 |
| Erfindungsgemäßes Beispiel 11 | 1 | 1 | 0 | 1 | 1 | 0 | Gt 1 | Gt 1 | Gt 2 |
| Erfindungsgemäßes Beispiel 12 | 1 | 1 | 1 | 1 | 1 | 1 | Gt 1 | Gt 1 | Gt 2 |
| Erfindungsgemäßes Beispiel 13 | 1 | 1 | 0 | 1 | 1 | 0 | Gt 1 | Gt 1 | Gt 2 |
| Erfindungsgemäßes Beispiel 14 | 2 | 1 | 1 | 1 | 1 | 1 | Gt 1 | Gt 1 | Gt 2 |
| Vergleichs-Beispiel 15 | 2 | 1 | 2 | 10 | 9 | 8 | Gt 4 | Gt 3 | Gt 4 |
| Vergleichs-Beispiel 16 | 2 | 2 | 2 | 6 | 7 | 7 | Gt 3 | Gt 4 | Gt 3 |

Bei der Beurteilung des Rostgrades und der Unterwanderung sind die Korrosionsschutzbeschichtungen gemäß den erfindungsgemäßen Beispiele denjenigen der Vergleichsbeispiele deutlich überlegen. Bedingt durch die nicht vorhandene Unterwanderung bei den Korrosionsschutzbeschichtungen gemäß den erfindungemäßen Beispielen, konnte auch weniger Oberfläche des Testbleches oxidieren. Insbesondere bei den beschichteten Testblechen des Vergleichsbeispiels 16 (ohne 2. Zwischenschicht) bildeten sich schon nach 1000 h Salzsprühbelastung Blasen. Nach Beendigung des Testes war jedoch kein wesentlicher Unterschied zu den beschichteten Testblechen gemäß dem Vergleichsbeispiel 16 zu sehen.

Beim Betrachten der Gitterschnittergebnisse ist deutlich, dass die beschichteten Testbleche der erfindungsgemäßen Beispiele denjenigen der Vergleichsbeispiele überlegen sind. Der Haftungsunterschied bei dem "NTC Aufbau mit NTC Decklack". im Vergleich zu dem normalen NTC Aufbau, ist auf die extreme Härte des Lacksystems zurückzuführen.

Im Bereich der Unterwanderung liegen alle NTC/Eckart Aufbauten deutlich vor dem "S.d.T"-System. Dies ist auf die Verwendung von Zinkflakes zurückzuführen, da Zinkstaub eher dazu neigt Blasenbildung hervorzurufen.

### Einwirken von Chemikalien (Kesternichtest):

Die Bleche wurden nach DIN 50018 abgeprüft und anschließend visuell beurteilt. Das Bewertungsraster reicht von 0 (keine Veränderung) bis 5 (komplett weiß angelaufen).

Ein Beurteilung wurde durchgeführt nach der Hälfte der Testzyklen und am Ende des Testes.

**Tab. 4: Ergebnisse Kesternichtest**

| Probe | **Nach 15 Zyklen** | | | **Nach 30 Zyklen** | | |
|---|---|---|---|---|---|---|
| | Blech 1 | Blech 2 | Blech 3 | Blech 1 | Blech 2 | Blech 3 |
| Erfindungsgemäßes Beispiel 8 | 2 | 2 | 1 | 2 | 2 | 2 |
| Erfindungsgemäßes Beispiel 9 | 0 | 0 | 1 | 0 | 0 | 1 |
| Erfindungsgemäße s Beispiel 10 | 2 | 2 | 1 | 2 | 2 | 2 |
| Erfindungsgemäßes Beispiel 11 | 2 | 2 | 2 | 2 | 2 | 2 |
| Erfindungsgemäßes Beispiel 12 | 2 | 2 | 2 | 2 | 2 | 2 |
| Erfindungsgemäßes Beispiel 13 | 2 | 2 | 1 | 2 | 2 | 2 |
| Erfindungsgemäßes Beispiel 14 | 2 | 2 | 2 | 2 | 2 | 2 |
| Vergleichs-Beispiel 15 | 3 | 3 | 2 | 3 | 3 | 3 |

Nach 15 Zyklen bzw. Tagen Kesternichtest sind die Proben der erfindungsgemäßen Beispiele deutlich besser. Sie weisen fast noch keine Veränderung gegenüber dem 0-Muster auf. Bei der Probe des Vergleichsbeispiels hingegen sind weiße Schlieren zu sehen, was auf einen Bindemittelabbau hindeutet.

Zusammenfassend ist insbesondere darauf hinzuweisen, dass die hervorragenden Ergebnisse der beschichteten Testbleche der erfindungsgemäßen Beispiele mit nur zweischichtigen Korrosionsschutzbeschichtungsaufbauten erreicht wurden, die insgesamt eine wesentlich geringere Schichtdicke als die der beschichteten Testbleche der Vergleichsbeispiele 15 bzw. 16 (4- bzw. 3-Schichtaufbauten) aufwiesen.

Die vorliegende Erfindung ermöglicht mithin die Bereitstellung einer Korrosionsschutzbeschichtung, die nur zwei Lackschichten erfordert und mithin in kürzerer Zeit bei deutlich verringertem Arbeitsaufwand und signifikant verbesserter Korrosionsbeständigkeit aufgebracht werden kann als dies mit drei- bzw. vierschichtigen Beschichtungen gemäß dem Stand der Technik möglich ist. Insbesondere bei großen Gegenständen, wie beispielsweise Brücken, Gebäuden, Sendmasten. Leitplanken, Schiffsrümpfen, etc. ermöglicht die vorliegende Erfindung im Hinblick auf den Arbeits- und Materialaufwand eine dramatische Kostenersparnis.

## Patentansprüche

1. Zweikomponenten-Korrosionsschutzlack mit Metallpigment, Epoxybindemittelkomponente und aminischem Härter,
**dadurch gekennzeichnet,**
**dass** der Zweikomponenten-Korrosionsschutzlack zwei Komponenten A und B enthält, wobei
Komponente A
(a1) (x - y) Gew.-% Metallpigmente, welche plättchenartige Zink-haltige Metallpigmente umfassen, wobei x = 30 bis 70 ist,
(a2) 10 bis 50 Gew.-% mindestens eines Epoxysilans und/oder Epoxysilikons,
(a3) 0 bis 40 Gew.-% eines organischen Lösemittels umfasst und wobei
Komponente B
(b1) 2 bis 15 Gew.-% mindestens eines aminischen Härters,
(b2) y Gew.-% plättchenartige Zink-haltige Metallpigmente umfassende Metallpigmente, wobei y = 0 bis x Gew.-% ist,
(b3) 0 bis 40 Gew.-% eines organischen Lösemittels, umfasst,
wobei sich die Gewichtsangaben auf das Gewicht des gesamten Zweikomponenten-Korrosionsschutzlackes beziehen und in der Summe 100 Gew.-% ergeben, mit der Maßgabe, dass der Wassergehalt des Zweikomponenten-Korrosionsschutzlacks insgesamt nicht mehr als 5 Gew.%, der Gehalt an Lösemittel insgesamt nicht mehr als 40 Gew.-% und der Gehalt der plättchenartigen Zink-haltigen Metallpigmente insgesamt wenigstens 20 Gew.-% beträgt.

2. Zweikomponenten-Korrosionsschutzlack nach Anspruch 1,
**dadurch gekennzeichnet;**
**dass** das mindestens eine Epoxysilan eine Verbindung der allgemeinen Formel (I) ist:
R¹ₐR²_{b}SiX_{(4-a-b)} (I)
wobei R¹ für einen nicht hydrolysierbaren Rest, R² für einen mindestens eine
Epoxygruppe tragenden, nicht hydrolysierbaren Rest und X für gleiche oder voneinander verschiedene Reste steht, die ausgewählt sind aus Hydroxylgruppe und hydrolysierbaren Substitutionsprodukten einer Hydroxylgruppe, wobei a ganzzahlige Werte von 0 bis 3 und b ganzzahlige Werte von 1 bis 3 annehmen können und a und b zusammen den Wert 1, 2 oder 3 haben, oder ein von der Verbindung gemäß Formel (I) abgeleitetes Si-O-Si-verbrücktes oligomeres oder polymeres Epoxysilikon.

3. Zweikomponenten-Korrosionsschutzlack nach einem der vorstehenden Ansprüche,
**dadurch gekennzeichnet;**
**dass** das mindestens eine Epoxysilan und/oder Epoxysilikon mit mindestens einem Polyol, vorzugsweise mit Bisphenol A oder einem Derivat davon gemischt und/oder umgesetzt ist.

4. Zweikomponenten-Korrosionsschutzlack nach einem der vorstehenden Ansprüche,
**dadurch gekennzeichnet;**
**dass** der aminische Härter Aminosilane umfasst und vorzugsweise aus Aminosilanen besteht.

5. Zweikomponenten-Korrosionsschutzlack nach einem der vorstehenden Ansprüche,
**dadurch gekennzeichnet,**
**dass** die Metallpigmente neben den plättchenartigen Zink-haltigen Metallpigmenten Zink-haltigen Metallstaub, plättchenartige Aluminium-haltige Metallpigmente und/oder Gemische davon umfassen können.

6. Zweikomponenten-Korrosionsschutzlack nach einem der vorstehenden Ansprüche,
**dadurch gekennzeichnet,**
**dass** die Metallpigmente folgende Zusammensetzungen umfassen oder aufweisen:
- 95 bis 100 Gew.-% plättchenartige Zink-haltige Pigmente, wobei sich die Gew.-% auf das Gesamtgewicht der vorhandenen Metallpigmente beziehen; oder
- Plättchenartige Zink-haltige Metallpigmente und Zink-haltiger Metallstaub, wobei das Gewichtsverhältnis des Zink-haltigen Metallstaubs zu den plättchenartigen Zink-haltigen Metallpigmenten in einem Bereich von 0 : 1 bis 1 : 1 liegt und der Gewichtsanteil von Zink in den plättchenartigen Zink-haltigen Metallpigmenten und im Zink-haltigen Metallstaub vorzugsweise jeweils wenigstens 60 Gew.-%, wobei sich die Gew.-% jeweils auf das Gesamtgewicht der plättchenartigen Zink-haltigen Metallpigmente bzw. des Zink-haltigen Metallstaubes beziehen, beträgt; oder
- Plättchenartige Zink-haltige Metallpigmente und plättchenartige Aluminium-haltige Pigmente, wobei das Gewichtsverhältnis der plättchenartigen Aluminium-haltigen Metallpigmente zu den plättchenartigen Zink-haltigen Pigmenten in einem Bereich von 0 : 1 bis 0,3 : 1 liegt und der Gewichtsanteil von Zink in den plättchenartigen Zink-haltigen Metallpigmenten bzw. der Gewichtsanteil von Aluminium in den plättchenartigen Aluminium-haltigen Pigmenten vorzugsweise jeweils wenigstens 60 Gew.-%, wobei sich die Gew.-% jeweils auf das Gesamtgewicht der plättchenartigen Zink-haltigen Metallpigmente bzw. der plättchenartigen Aluminium-haltigen Pigmente beziehen, beträgt; oder
- Plättchenartige Zink-haltige Metallpigmente, plättchenartige Aluminium-haltige Pigmente und Zink-haltiger Metallstaub, wobei das Gewichtsverhältnis der plättchenartigen Aluminium-haltigen Pigmenten, des Zink-haltigen Staubes und der plättchenartigen Zink-haltigen Metallpigmente zueinander in einem Bereich von 0 : 0 : 1 bis 0,3 : 0,5 : 1 liegt und der Gewichtsanteil von Zink in den plättchenartigen Zink-haltigen Metallpigmenten, der Gewichtsanteil von Aluminium in den plättchenartigen Aluminium-haltigen Pigmenten und der Gewichtsanteil von Zink im Zink-haltigen Metallstaub vorzugsweise jeweils wenigstens 60 Gew.-%, wobei sich die Gew.-% jeweils auf das Gesamtgewicht der plättchenartigen Zink-haltigen Metallpigmente, der plättchenartigen Aluminium-haltigen Pigmente bzw. des Zink-haltigen Metallstaubes beziehen, beträgt.

7. Zweikomponenten-Korrosionsschutzlack nach einem der vorstehenden Ansprüche,
**dadurch gekennzeichnet;**
**dass** die plättchenartigen Zink-haltigen Metallpigmente einen Zinkgehalt von wenigstens 75 Gew.-%, bevorzugt wenigstens 85 Gew.-%, weiter bevorzugt wenigstens 95 Gew.-%, jeweils bezogen auf das Gewicht des plättchenartigen Zink-haltigen Metallpigmentes, aufweisen.

8. Zweikomponenten-Korrosionsschutzlack nach einem der vorstehenden Ansprüche,
**dadurch gekennzeichnet;**
**dass** die plättchenartigen Zink-haltigen Metallpigmente aus Zinklegierungen bestehen können.

9. Zweikomponenten-Korrosionsschutzlack nach Anspruch 8,
**dadurch gekennzeichnet;**
**dass** die Zinklegierungen Legierungen von Zink mit Aluminium, Zinn, Mangan oder deren Mischungen sind.

10. Zweikomponenten-Korrosionsschutzlack nach einem der vorstehenden Ansprüche,
**dadurch gekennzeichnet;**
**dass** der Gesamtgehalt an plättchenartigen Zink-haltigen Pigmenten in dem Zweikomponenten-Korrosionsschutzlack in einem Bereich von 30 bis 50 Gew.-%, vorzugsweise von 30 bis 45 Gew.-%, jeweils bezogen auf das Gewicht des gesamten Zweikomponenten-Korrosionsschutzlackes, liegt.

11. Zweikomponenten-Korrosionsschutzlack nach einem der vorstehenden Ansprüche,
**dadurch gekennzeichnet;**
**dass** der Gesamtgehalt an plättchenartigen Aluminium-haltigen Pigmenten in dem Zweikomponenten-Korrosionsschutzlack in einem Bereich von 0 bis 15 Gew.-%, vorzugsweise von 5 bis 10 Gew.-%, jeweils bezogen auf das Gewicht des gesamten Zweikomponenten-Korrosionsschutzlackes, liegt.

12. Zweikomponenten-Korrosionsschutzlack nach einem der vorstehenden Ansprüche,
**dadurch gekennzeichnet;**
**dass** der Gesamtgehalt an Zink-haltigem Metallstaub in dem Zweikomponenten-Korrosionsschutzlack in einem Bereich von 0 bis 40 Gew.-%, vorzugsweise von 5 bis 30 Gew.-%, jeweils bezogen auf das Gewicht des gesamten Zweikomponenten-Korrosionsschutzlackes, liegt.

13. Zweikomponenten-Korrosionsschutzlack nach einem der vorstehenden Ansprüche,
**dadurch gekennzeichnet,**
**dass** der Gehalt an Wasser weniger als 3 Gew.-%, bevorzugt weniger als 1 Gew.-%, jeweils bezogen auf das Gewicht des gesamten Zweikomponenten-Korrosionsschutzlackes, beträgt.

14. Zweikomponenten-Korrosionsschutzlack nach einem der vorstehenden Ansprüche,
**dadurch gekennzeichnet,**
**dass** der Gehalt an Lösemittel weniger als 20 Gew.-%, bevorzugt weniger als 10 Gew.-%, weiter bevorzugt weniger als 5 Gew.-%, jeweils bezogen auf das Gewicht des gesamten Zweikomponenten-Korrosionsschutzlackes, beträgt.

15. Zweikomponenten-Korrosionsschutzlack nach einem der vorstehenden Ansprüche,
**dadurch gekennzeichnet,**
**dass** der Zweikomponenten-Korrosionsschutzlack mindestens ein weichmachendes Additiv enthält, wobei das weichmachende Additiv in Komponente A und/oder Komponente B enthalten sein kann.

16. Zweikomponenten-Korrosionsschutzlack nach Anspruch 15,
**dadurch gekennzeichnet,**
**dass** das mindestens eine weichmachende Additiv aus der Gruppe, die aus Weichmacher, Plastifizierharz und deren Mischungen besteht, ausgewählt wird.

17. Zweikomponenten-Korrosionsschutzlack nach Anspruch 15 oder 16,
**dadurch gekennzeichnet,**
**dass** der Zweikomponenten-Korrosionsschutzlack ein oder mehrere weichmachende(s) Additiv(e) bis zu insgesamt 15 Gew.-%, vorzugsweise 2 bis 10 Gew.-%, jeweils bezogen auf das Gewicht des gesamten Zweikomponenten-Korrosionsschutzlackes, enthält.

18. Zweikomponenten-Korrosionsschutzlack nach einem der vorstehenden Ansprüche,
**dadurch gekennzeichnet,**
**dass** der Zweikomponenten-Korrosionsschutzlack weitere Additive wie Dispergierhilfsmittel, Netzmittel, Verlaufsmittel, Untergrundbenetzmittel, Füllstoffe und/oder weitere Bindemittel enthält.

19. Zweikomponenten-Korrosionsschutzlack nach einem der vorangegangenen Ansprüche,
**dadurch gekennzeichnet,**
**daß** die Komponente A und Komponente B voneinander getrennt vorliegen.

20. Verfahren zur Herstellung eines Zweikomponenten-Korrosionsschutzlackes nach einem der Ansprüche 1 bis 19,
**dadurch gekennzeichnet,**
**dass** folgende Schritte umfaßt
a) Vorlegen von 10 bis 50 Gew.-% von Epoxysilan wobei das Epoxysilandurch kontrollierte Zugabe von Wasser optional oligomerisiert oder polymerisiert werden kann,
b) Vorlegen von 2 bis 15 Gew.-% an aminischem Härter,
c) Homogenes Vermischen von (x - y) Gew.-% der plättchenartigen Zink-haltigen Metallpigmente umfassenden Metallpigmente wobei x = 30 bis 70 ist, mit dem Epoxysilan unter Bereitstellung der Komponente A und y Gew.-% plättchenartige Zink-haltige Metallpigmente umfassende Metallpigmente mit dem aminischen Härter, wobei y = 0 bis x Gew.-% ist, unter Bereitstellung der Komponente B.

21. Verfahren zur Herstellung eines Zweikomponenten-Korrosionsschutzlackes nach Anspruch 20,
**dadurch gekennzeichnet,**
**dass** zu Komponente A und/oder zu Komponente B Lösemittel vor, während oder nach der Einarbeitung der Zink-haltigen Metallpigmente umfassenden Metallpigmente in Mengen von insgesamt maximal 40 Gew.-%, bezogen auf das Gewicht des gesamten Zweikomponenten-Korrosionsschutzlackes, zugegeben werden.

22. Verfahren zur Herstellung eines Zweikomponenten-Korrosionsschutzlackes nach Anspruch 20 oder 21,
**dadurch gekennzeichnet,**
**dass** wenigstens eine weichmachende Komponente zu Komponente A und/oder zu Komponente B bis zu insgesamt maximal 15 Gew.-%, bezogen auf das gesamte Gewicht des Zweikomponenten-Korrosionsschutzlackes, hinzugefügt wird.

23. Verfahren zur Herstellung eines Zweikomponenten-Korrosionsschutziackes nach einem der Ansprüche 1 bis 18,
**dadurch gekennzeichnet,**
**dass** die Komponente A und die Komponente B miteinander vermengt werden.

24. Verwendung des Zweikomponenten-Korrosionsschutzlacks nach einem der Ansprüche 1 bis 19 zur Herstellung von Korrosionsschutzbeschichtungen.

25. Verwendung eines Zweikomponenten-Korrosionsschutzlacks nach einem der Ansprüche 1 bis 19 sowie einem Decklack zur Herstellung von zweischichtigen Korrosionsschutzbeschichtungen.

26. Korrosionsschutzbeschichtung,
**dadurch gekennzeichnet,**
**dass** die Korrosionsschutzbeschichtung aus einer ersten Beschichtung, die aus einem Zweikomponenten-Korrosionsschutzlack nach einem der Ansprüche 1 bis 18 hergestellt ist, und aus einer Decklackschicht besteht.

27. Gegenstand,
**dadurch gekennzeichnet,**
**daß** er mit einem Zweikomponenten-Korrosionsschutzlack nach einem der Ansprüche 1 bis 18 oder einer Korrosionsschutzbeschichtung nach Anspruch 26 versehen ist.

## Claims

1. Two-component anti-corrosion paint with metal pigment, epoxy binding agent components and amine-based hardeners, **characterised in that**
the two-component anti-corrosion paint contains two components A and B and
component A comprises
(a1) (x - y) % by weight of metal pigments comprising platelet-type metal pigments containing zinc, and x = 30 to 70,
(a2) 10 to 50 % by weight of at least one epoxy silane and/or epoxy silicone,
(a3) 0 to 40 % by weight of an organic solvent,
and
component B comprises
(b1) 2 to 15 % by weight of at least one amine-based hardener, (b2) y % by weight of metal pigments comprising platelet-type metal pigments containing zinc, and y = 0 to x % by weight,
(b3) 0 to 40 % by weight of an organic solvent,
the specified weights relating to the weight of the total two-component anti-corrosion paint and totalling 100 % by weight, provided the water content of the two-component anti-corrosion paint is not more than 5% by weight, the content of solvent in total is not more than 40 % by weight and the content of platelet-type metal pigments containing zinc is at least 20 % by weight in total.

2. Two-component anti-corrosion paint as claimed in claim 1, **characterised in that**
the at least one epoxy silane is a compound based on the general formula (1):
R¹ₐR²_{b}SiX_{(4-a-b)} (I)
where R¹ stands for a non-hydrolysable residue, R² stands for at least one non-hydrolysable residue carrying an epoxy group and X stands for residues which may be the same or different from one another selected from a hydroxyl group and hydrolysable substitution products of a hydroxyl group, where a may represent an integer from 0 to 3 and b may represent an integer from 1 to 3, or a Si-O-Si-bridged oligomeric or polymeric epoxy silicone derived from the compound based on formula (I).

3. Two-component anti-corrosion paint as claimed in one of the preceding claims,
**characterised in that**
the at least one epoxy silane and/or epoxy silicone is mixed with and/or reacted with at least one polyol, preferably bisphenol A or a derivative thereof.

4. Two-component anti-corrosion paint as claimed in one of the preceding claims,
**characterised in that**
the amine-based hardener contains amino silanes and preferably consists of amino silanes.

5. Two-component anti-corrosion paint as claimed in one of the preceding claims,
**characterised in that**
in addition to the platelet-type metal pigments containing zinc, the metal pigments may contain metal dust containing zinc, platelet-type metal pigments containing aluminium and/or mixtures thereof.

6. Two-component anti-corrosion paint as claimed in one of the preceding claims,
**characterised in that**
the metal pigments comprise or contain the following compositions:
- 95 to 100 % by weight of platelet-type pigments containing zinc, the % by weight being based on the total weight of the metal pigments present; or
- platelet-type metal pigments containing zinc and metal dust containing zinc, and the weight ratio of the metal dust containing zinc to the platelet-type metal pigments containing zinc is in a range of from 0 : 1 to 1 : 1 and the proportion of weight of zinc in the platelet-type metal pigments containing zinc and in the metal dust containing zinc is preferably 60 % by weight respectively, and the % by weight relates to the total weight of platelet-type metal pigments containing zinc and the metal dust containing zinc in each case; or
- platelet-type metal pigments containing zinc and platelet-type pigments containing aluminium, and the weight ratio of the platelet-type metal pigments containing aluminium to the platelet-type pigments containing zinc is in a range of from 0 : 1 to 0.3 : 1 and the proportion of weight of zinc in the platelet-type metal pigments containing zinc and the proportion of weight of aluminium in the platelet-type pigments containing aluminium is preferably at least 60 % by weight respectively, and the % by weight is based on the total weight of the platelet-type metal pigments containing zinc and the platelet-type pigments containing aluminium in each case; or
- platelet-type metal pigments containing zinc, platelet-type pigments containing aluminium and metal dust containing zinc, and the weight ratio of the platelet-type pigments containing aluminium, the dust containing zinc and the platelet-type metal pigments containing zinc with respect to one another is in a range of from 0 : 0 : 1 to 0.3 : 0.5 : 1, and the proportion by weight of zinc in the platelet-type metal pigments containing zinc, the proportion by weight of aluminium in the platelet-type pigments containing aluminium and the proportion by weight of zinc in the metal dust containing zinc is preferably at least 60 % by weight respectively, and the % by weight is based on the total weight of the platelet-type metal pigments containing zinc, the platelet-type pigments containing aluminium and the metal dust containing zinc in each case.

7. Two-component anti-corrosion paint as claimed in one of the preceding claims,
**characterised in that**
the platelet-type metal pigments containing zinc have a zinc content of at least 75 % by weight, preferably at least 85 % by weight, even more preferably at least 95 % by weight, based on the weight of the platelet-type metal pigments containing zinc respectively.

8. Two-component anti-corrosion paint as claimed in one of the preceding claims,
**characterised in that**
the plate -shaped metal pigments containing zinc may consist of zinc alloys.

9. Two-component anti-corrosion paint as claimed in claim 8, **characterised in that**
the zinc alloys are alloys of zinc with aluminium, tin, manganese or mixtures thereof.

10. Two-component anti-corrosion paint as claimed in one of the preceding claims,
**characterised in that**
the total content of platelet-type pigments containing zinc in the two-component anti-corrosion paint is in a range of from 30 to 50 % by weight, preferably 30 to 45 % by weight respectively, based on the weight of the total two-component anti-corrosion paint.

11. Two-component anti-corrosion paint as claimed in one of the preceding claims,
**characterised in that**
the total content of platelet-type pigments containing aluminium in the two-component anti-corrosion paint is in a range of from 0 to 15 % by weight, preferably 5 to 10 % by weight, based on the weight of the total two-component anti-corrosion paint in each case.

12. Two-component anti-corrosion paint as claimed in one of the preceding claims,
**characterised in that**
the total content of metal dust containing zinc in the two-component anti-corrosion paint is in a range of from 0 to 40 % by weight, preferably 5 to 30 % by weight, based on the weight of the total two-component anti-corrosion paint in each case.

13. Two-component anti-corrosion paint as claimed in one of the preceding claims,
**characterised in that**
the content of water is less than 3 % by weight, preferably less than 1 % by weight, based on the weight of the total two-component anti-corrosion paint in each case.

14. Two-component anti-corrosion paint as claimed in one of the preceding claims,
**characterised in that**
the content of solvent is less than 20 % by weight, preferably less than 10 % by weight, even more preferably less than 5 % by weight, based on the weight of the total two-component anti-corrosion paint in each case.

15. Two-component anti-corrosion paint as claimed in one of the preceding claims,
**characterised in that**
the two-component anti-corrosion paint contains at least one additive to impart softness and the softness-imparting additive may be contained in component A and/or component B.

16. Two-component anti-corrosion paint as claimed in claim 15, **characterised in that**
the at least one softness-imparting additive is selected from the group comprising softeners, plasticizing resin and mixtures thereof.

17. Two-component anti-corrosion paint as claimed in claim 15 or 16, **characterised in that**
the two-component anti-corrosion paint contains one or more softness-imparting additives up to a total of 15 % by weight, preferably 2 to 10 % by weight, based on the weight of the total two-component anti-corrosion paint in each case.

18. Two-component anti-corrosion paint as claimed in one of the preceding claims,
**characterised in that**
the two-component anti-corrosion paint contains other additives such as dispersing agents, wetting agents, coalescing agents, substrate wetting agents, fillers and/or other binding agents.

19. Two-component anti-corrosion paint as claimed in one of the preceding claims,
**characterised in that**
component A and component B are present separately from one another.

20. Method of producing a two-component anti-corrosion paint as claimed in one of claims 1 to 19,
**characterised in that**
it comprises the following steps:
a) taking 10 to 50 % by weight of epoxy silane, which epoxy silane may optionally be oligomerised or polymerised by the controlled addition of water,
b) taking 2 to 15 % by weight of amine-based hardeners,
c) homogeneously mixing (x-y) % by weight of the metal pigments comprising platelet-type metal pigments containing zinc, where x = 30 to 70, with the epoxy silane to produce component A, and y % by weight of metal pigments comprising platelet-type metal pigments containing zinc with the amine-based hardeners, where y = 0 to x % by weight, to produce component B.

21. Method of producing a two-component anti-corrosion paint as claimed in claim 20,
**characterised in that**
solvents are added to component A and/or component B before, during or after incorporating the metal pigments comprising metal pigments containing zinc in quantities of at most 40 % by weight based on the weight of the total two-component anti-corrosion paint.

22. Method of producing a two-component anti-corrosion paint as claimed in claim 20 or 21,
**characterised in that**
at least one softness-imparting component is added to component A and/or to component B up to a total of at most 15 % by weight based on the total weight of the two-component anti-corrosion paint.

23. Method of producing a two-component anti-corrosion paint as claimed in one of claims 1 to 18,
**characterised in that**
component A and component B are mixed with one another.

24. Use of the two-component anti-corrosion paint as claimed in one of claims 1 to 19 for producing anti-corrosion coatings.

25. Use of a two-component anti-corrosion paint as claimed in one of claims 1 to 19 and a top coat paint to produce two-layered anti-corrosion coatings.

26. Anti-corrosion coating,
**characterised in that**
the anti-corrosion coating consists of a first coating produced from a two-component anti-corrosion paint as claimed in one of claims 1 to 18 and a layer of top coat paint.

27. Object,
**characterised in that**
it is provided with a two-component anti-corrosion paint as claimed in one of claims 1 to 18 or an anti-corrosion coating as claimed in claim 26.

## Revendications

1. Peinture anticorrosion à deux composants avec un pigment métallique, un composant adhésif époxyde et un durcisseur à base d'amine,
**caractérisée en ce que**
la peinture anticorrosion à deux composants contient deux composant A et B, sachant que
le composant A comprend
(a1) (x - y) % en poids de pigments métalliques, lesquels comprennent des pigments métalliques en plaquettes contenant du zinc, sachant que l'on a x = 30 à 70,
(a2) 10 à 50 % en poids d'au moins un époxysilane et/ou d'une époxysilicone,
(a3) 0 à 40 % en poids d'un solvant organique,
et sachant que
le composant B comprend
(b1) 2 à 15 % en poids d'au moins un durcisseur à base d'amine,
(b2) y % en poids de pigments métalliques en plaquettes comprenant des pigments métalliques contenant du zinc, sachant que l'on a y = 0 à x % en poids,
(b3) 0 à 40 % en poids d'un solvant organique,
les données pondérales se rapportant au poids de l'ensemble de la peinture anticorrosion à deux composants et donnant une somme de 100 % en poids, avec la condition que la teneur totale en eau de la peinture anticorrosion à deux composants n'est pas de plus de 5 % en poids, que la teneur totale en solvant organique n'est pas de plus de 40 % en poids et que la teneur totale en pigments métalliques contenant du zinc est d'au moins 20 % en poids.

2. Peinture anticorrosion à deux composants selon la revendication 1, **caractérisée en ce que** ledit au moins un époxysilane est un composé de la formule générale (I) :
R¹ₐR²_{b}SiX_{(4-a-b)} (I)
dans laquelle R¹ représente un radical non hydrolysable, R² un radical portant au moins un groupe époxyde, non hydrolysable et X des radicaux identiques ou différents les uns des autres, qui sont choisis parmi le groupe hydroxyle et des produits de substitution hydrolysables d'un groupe hydroxyle, sachant que a peut prendre des valeurs entières de 0 à 3 et b des valeurs entières de 1 à 3, et que a et b ensemble peuvent avoir les valeurs 1, 2 ou 3, ou une époxysilicone oligomère ou polymère à ponts Si-O-Si dérivée du composé selon la formule (I).

3. Peinture anticorrosion à deux composants selon l'une quelconque des revendications précédentes, **caractérisée en ce que** ledit au moins un époxysilane est mélangé et/ou a réagi avec au moins un polyol, de préférence avec un bisphénol A ou un dérivé de celui-ci.

4. Peinture anticorrosion à deux composants selon l'une quelconque des revendications précédentes, **caractérisée en ce que** le durcisseur à base d'amine comprend des aminosilanes et consiste de préférence en aminosilanes.

5. Peinture anticorrosion à deux composants selon l'une quelconque des revendications précédentes, **caractérisée en ce que** les pigments métalliques peuvent comprendre à côté des pigments métalliques en forme de plaquettes contenant du zinc de la poussière de zinc, des pigments métalliques en forme de plaquettes contenant de l'aluminium et/ou des mélanges de ceux-ci.

6. Peinture anticorrosion à deux composants selon l'une quelconque des revendications précédentes, **caractérisée en ce que** les pigments métalliques comprennent ou présentent les compositions suivantes :
- 95 à 100 % en poids de pigments en forme de plaquettes contenant du zinc, les % en poids se rapportant au poids total des pigments métalliques présents ; ou
- des pigments métalliques en forme de plaquettes contenant du zinc et de la poussière métallique contenant du zinc, le rapport pondéral de la poussière métallique contenant du zinc aux pigments métalliques en forme de plaquettes contenant du zinc se trouvant dans un intervalle de 0 : 1 à 1 : 1 et la proportion pondérale du zinc dans les pigments métalliques en forme de plaquettes contenant du zinc et dans la poussière métallique contenant du zinc étant de préférence d'au moins 60 % en poids, sachant que les % en poids se rapportent chaque fois au poids total des pigments métalliques en forme de plaquettes contenant du zinc, respectivement de la poussière métallique contenant du zinc ; ou
- des pigments métalliques en forme de plaquettes contenant du zinc et des pigments métalliques en forme de plaquettes contenant de l'aluminium, le rapport pondéral des pigments métalliques en forme de plaquettes contenant de l'aluminium aux pigments métalliques en forme de plaquettes contenant du zinc se trouvant dans un intervalle de 0 : 1 à 0,3 : 1 et la proportion pondérale du zinc dans les pigments métalliques en forme de plaquettes contenant du zinc, respectivement la proportion pondérale de l'aluminium dans les pigments métalliques en forme de plaquettes contenant de l'aluminium étant de préférence d'au moins 60 % en poids respectivement, sachant que les % en poids se rapportent chaque fois au poids total des pigments métalliques en forme de plaquettes contenant du zinc, respectivement des pigments métalliques en forme de plaquettes contenant de l'aluminium ; ou
- des pigments métalliques en forme de plaquettes contenant du zinc, des pigments métalliques en forme de plaquettes contenant de l'aluminium et de la poussière métallique contenant du zinc, le rapport pondéral des pigments métalliques en forme de plaquettes contenant de l'aluminium, de la poussière métallique contenant du zinc et des pigments métalliques en forme de plaquettes contenant du zinc les uns par rapport aux autres se trouvant dans un intervalle de 0:0:1 à 0,3 : 0,5 :1 et la proportion pondérale du zinc dans les pigments métalliques en forme de plaquettes contenant du zinc, la proportion pondérale de l'aluminium dans les pigments métalliques en forme de plaquettes contenant de l'aluminium et la proportion pondérale du zinc dans la poussière métallique contenant du zinc étant de préférence d'au moins 60 % en poids respectivement, sachant que les % en poids se rapportent chaque fois au poids total des pigments métalliques en forme de plaquettes contenant du zinc, des pigments métalliques en forme de plaquettes contenant de l'aluminium, respectivement de la poussière métallique contenant du zinc.

7. Peinture anticorrosion à deux composants selon l'une quelconque des revendications précédentes, **caractérisée en ce que** les pigments métalliques en forme de plaquettes contenant du zinc présentent une teneur en zinc d'au moins 75 % en poids, de préférence d'au moins 85 % en poids, encore plus préférablement d'au moins 95 % en poids, rapportée chaque fois au poids du pigment métallique en forme de plaquettes contenant du zinc.

8. Peinture anticorrosion à deux composants selon l'une quelconque des revendications précédentes, **caractérisée en ce que** les pigments métalliques en forme de plaquettes contenant du zinc peuvent consister en alliages de zinc.

9. Peinture anticorrosion à deux composants selon la revendication 8, **caractérisée en ce que** les alliages de zinc sont des alliages du zinc avec de l'aluminium, de l'étain, du manganèse ou leur mélanges.

10. Peinture anticorrosion à deux composants selon l'une quelconque des revendications précédentes, **caractérisée en ce que** la teneur totale en pigments contenant du zinc dans la peinture anticorrosion à deux composants se trouve dans l'intervalle de 30 à 50 % en poids, de préférence de 30 à 45 % en poids, rapportée chaque fois au poids de l'ensemble de la peinture anticorrosion à deux composants.

11. Peinture anticorrosion à deux composants selon l'une quelconque des revendications précédentes, **caractérisée en ce que** la teneur totale en les pigments métalliques en forme de plaquettes contenant de l'aluminium dans la peinture anticorrosion à deux composants se trouve dans l'intervalle de 0 à 15 % en poids, de préférence de 5 à 10 % en poids, rapportée à chaque fois au poids de l'ensemble de la peinture anticorrosion à deux composants.

12. Peinture anticorrosion à deux composants selon l'une quelconque des revendications précédentes, **caractérisée en ce que** la teneur totale en la poussière métallique contenant du zinc dans la peinture anticorrosion à deux composants se trouve dans l'intervalle de 0 à 40 % en poids, de préférence de 5 à 30 % en poids, rapportée à chaque fois au poids de l'ensemble de la peinture anticorrosion à deux composants.

13. Peinture anticorrosion à deux composants selon l'une quelconque des revendications précédentes, **caractérisée en ce que** la teneur en eau est de moins de 3 % en poids, de préférence de moins de 1 % en poids, rapportée à chaque fois au poids de l'ensemble de la peinture anticorrosion à deux composants.

14. Peinture anticorrosion à deux composants selon l'une quelconque des revendications précédentes, **caractérisée en ce que** la teneur en solvant est de moins de 20 % en poids, de préférence de moins de 10 % en poids, encore plus préférablement de moins de 5 % en poids, rapportée à chaque fois au poids de l'ensemble de la peinture anticorrosion à deux composants.

15. Peinture anticorrosion à deux composants selon l'une quelconque des revendications précédentes, **caractérisée en ce que** la peinture anticorrosion à deux composants contient au moins un additif plastifiant, sachant que l'additif plastifiant peut être contenu dans le composant A et/ou dans le composant B.

16. Peinture anticorrosion à deux composants selon la revendication 15, **caractérisée en ce que** ledit au moins un additif plastifiant est choisi parmi le groupe consistant en les plastifiants, les résines plastifiantes et leurs mélanges.

17. Peinture anticorrosion à deux composants selon la revendication 15 ou 16, **caractérisée en ce que** la peinture anticorrosion à deux composants contient un ou plusieurs additif(s) plastifiant(s) jusqu'à 15 % en poids au total, de préférence à raison de 2 à 10 % en poids, rapportés à chaque fois au poids de l'ensemble de la peinture anticorrosion à deux composants.

18. Peinture anticorrosion à deux composants selon l'une quelconque des revendications précédentes, **caractérisée en ce que** la peinture anticorrosion à deux composants contient d'autres additifs comme des agents dispersants, des tensioactifs, des nivelants, des mouillants de fond, des charges et/ou d'autres adhésifs.

19. Peinture anticorrosion à deux composants selon l'une quelconque des revendications précédentes, **caractérisée en ce que** le composant A et le composant B sont présents séparés.

20. Procédé de préparation d'une peinture anticorrosion à deux composants selon l'une quelconque des revendications 1 à 19, **caractérisé en ce qu'**il comprend les étapes suivantes :
a) mise en oeuvre de 10 à 50 % en poids d'époxysilane, l'époxysilane pouvant être en option oligomérisé ou polymérisé par addition contrôlée d'eau,
b) mise en oeuvre de 2 à 15 % en poids de durcisseur à base d'amine,
c) mélangeage homogène de (x - y) % en poids des pigments métalliques comprenant les pigments métalliques en forme de plaquettes contenant du zinc, sachant que l'on a x = 30 à 70, avec l'époxysilane moyennant mise à disposition du composant A, et y % en poids des pigments métalliques comprenant les pigments métalliques en forme de plaquettes contenant du zinc avec le durcisseur à base d'amine, sachant que l'on a y = 0 à x % en poids, moyennant mise à disposition du composant B.

21. Procédé de préparation d'une peinture anticorrosion à deux composants selon la revendication 20, **caractérisé en ce que** l'on ajoute du solvant au composant A et/ou au composant B, pendant ou après l'incorporation des pigments métalliques comprenant les pigments contenant du zinc, en des quantités de 40 % en poids en tout au maximum, rapportées au poids de l'ensemble de la peinture anticorrosion à deux composants.

22. Procédé de préparation d'une peinture anticorrosion à deux composants selon la revendication 20 ou 21, **caractérisé en ce que** l'on ajoute moins un composant plastifiant au composant A et/ou au composant B, jusqu'à 15 % en poids en tout au maximum, rapportés au poids de l'ensemble de la peinture anticorrosion à deux composants.

23. Procédé de préparation d'une peinture anticorrosion à deux composants selon l'une quelconque des revendications 1 à 18, **caractérisé en ce que** l'on mélange le composant A et le composant B l'un avec l'autre.

24. Utilisation de la peinture anticorrosion à deux composants selon l'une quelconque des revendications 1 à 19 à la fabrication de revêtements anticorrosion.

25. Utilisation de la peinture anticorrosion à deux composants selon l'une quelconque des revendications 1 à 19, de même que d'une peinture de couverture, à la fabrication de revêtements anticorrosion à deux couches.

26. Revêtement anticorrosion, **caractérisé en ce que** le revêtement anticorrosion consiste en un premier revêtement qui est fabriqué à partir d'une peinture anticorrosion à deux composants selon l'une quelconque des revendications 1 à 18 et en une couche de peinture de couverture.

27. Objet, **caractérisé en ce qu'**il est doté d'une peinture anticorrosion à deux composants selon l'une quelconque des revendications 1 à 18 ou d'un revêtement anticorrosion selon la revendication 26.
